(19) Europäisches Patentamt

European Patent Office

Office européen des brevets

(11) **EP 4 560 509 A1**

(12) **EUROPEAN PATENT APPLICATION**

(43) Date of publication:
**28.05.2025 Bulletin 2025/22**

(21) Application number: **24214552.2**

(22) Date of filing: **21.11.2024**

(51) International Patent Classification (IPC):
*G06F 21/56* (2013.01)          *G06N 3/0464* (2023.01)
*G06N 3/084* (2023.01)          *G06N 3/086* (2023.01)
*G06N 3/126* (2023.01)

(52) Cooperative Patent Classification (CPC):
**G06F 21/56; G06F 21/562; G06F 21/563;
G06N 3/045; G06N 3/0464; G06N 3/084;
G06N 3/086; G06N 3/126**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.11.2023 US 202363601399 P**

(71) Applicant: **BlackBerry Limited
Waterloo, Ontario N2K 0A7 (CA)**

(72) Inventors:
• **FUNG, Benjamin Chin Ming
  Montreal, Quebec, H3A 1X1 (CA)**
• **SAQIB, Mohd
  Montreal, Quebec, H3A 1X1 (CA)**

(74) Representative: **MERH-IP Matias Erny Reichl
Hoffmann
Patentanwälte PartG mbB
Paul-Heyse-Straße 29
80336 München (DE)**

(54) **METHODS AND SYSTEMS FOR MALWARE ANALYSIS USING A GENETIC ALGORITHM GRAPH EXPLAINER**

(57)     A method for malware analysis comprising: disassembling executable code to create disassembled instructions; extracting instruction blocks from the disassembled instructions; encoding the instruction blocks to create encoded instruction blocks and generating a first data graph, wherein the first data graph comprises nodes, each node from the first data graph being associated with an encoded instruction block; determining for each node an embedding of the encoded instruction block to create a canonical executable graph; classifying the canonical executable graph into either a benign family or a malicious family; and determining that the executable code is a malware when the canonical executable graph belongs to a malicious family.

EP 4 560 509 A1

Description

FIELD OF THE DISCLOSURE

The present disclosure relates to malware analysis and, in particular, relates to malware analysis using graph explanation methods.

BACKGROUND

The background description includes information that may be useful in understanding the present inventive subject matter. It is not an admission that any of the information provided herein is prior art or applicant admitted prior art, or relevant to the presently claimed inventive subject matter, or that any publication specifically or implicitly referenced is prior art or applicant admitted prior art.

In the contemporary cybersecurity landscape, the rapid evolution of malicious software models necessitates the continuous refinement of threat detection methodologies. Traditional static or signature-based analyses have proven inadequate in the face of these evolving threats, often employing obfuscation techniques to evade detection.

Machine learning (ML) approaches show promise, but cannot capture the dynamic nature of evolving threats. Conversely, malware analysis often prefers reverse engineering over dynamic analysis, employing Call Graphs, Control Flow Graphs (CFGs), and Data Flow Graphs (DFGs) with deep learning (DL) models, which tend to be black-box in nature.

BRIEF DESCRIPTION OF THE DRAWINGS

The present disclosure will be better understood having regard to the drawings in which:

Figure 1 is a block diagram showing malware analysis from static, dynamic and reverse engineering perspectives.

Figure 2 is a block diagram showing a process for the creation of Canonical Executable Graphs.

Figure 3 is a block diagram showing the application of a Genetic Algorithm Graph Explainer process to Canonical Executable Graphs.

Figure 4 is a block diagram showing a Genetic Algorithm Graph Explainer process.

Figure 5 is a graph showing a Minimum Mean Discrepancy between class Benign and class Bladabindi using a Control Flow Graph Explainer and a Genetic Algorithm Graph Explainer process.

Figure 6 is a graph showing a Minimum Mean Discrepancy between class Benign and class Bundlore using a Control Flow Graph Explainer and a Generic Algorithm Graph Explainer process.

Figure 7 is a graph showing a Minimum Mean Discrepancy between class Benign and class Downloadadmin using a Control Flow Graph Explainer and a Genetic Algorithm Graph Explainer process.

Figure 8 is a graph showing a Minimum Mean Discrepancy between class Benign and class Gamarue using a Control Flow Graph Explainer and a Genetic Algorithm Graph Explainer process.

Figure 9 is a graph showing a Minimum Mean Discrepancy between class Benign and class Firseria using a Control Flow Graph Explainer and a Genetic Algorithm Graph Explainer process.

Figure 10 is a graph showing a Minimum Mean Discrepancy between class Benign and class Emotet using a Control Flow Graph Explainer and a Genetic Algorithm Graph Explainer process.

Figure 11 is a graph showing a Minimum Mean Discrepancy between class Bladabindi and class Gamarue using a Control Flow Graph Explainer and a Genetic Algorithm Graph Explainer process.

Figure 12 is a graph showing a Minimum Mean Discrepancy between class Bundlore and class Downloadadmin using a Control Flow Graph Explainer and a Genetic Algorithm Graph Explainer process.

Figure 13 is a graph showing a Minimum Mean Discrepancy between class Bladabindi and class Firseria using a Control Flow Graph Explainer and a Genetic Algorithm Graph Explainer process.

**Figure 14** is a graph showing a Minimum Mean Discrepancy between class Bladabindi and class Downloadadmin using a Control Flow Graph Explainer and a Genetic Algorithm Graph Explainer process.

**Figure 15** is a graph showing a Minimum Mean Discrepancy between class Firseria and class Gamarue using a Control Flow Graph Explainer and a Genetic Algorithm Graph Explainer process.

**Figure 16** is a graph showing a Minimum Mean Discrepancy between class Bundlore and class Emotet using a Control Flow Graph Explainer and a Genetic Algorithm Graph Explainer process.

**Figure 17** is a block diagram showing four malware families with malicious code interpretability highlighted.

**Figure 18** is a plot showing an Emotet malware family with malicious subgraph interpretability highlighted.

**Figure 19** is a plot showing a Firseria malware family with malicious subgraph interpretability highlighted.

**Figure 20** is a plot showing a Downloadadmin malware family with malicious subgraph interpretability highlighted.

**Figure 21** is a plot showing a Gamarue malware family with malicious subgraph interpretability highlighted.

**Figure 22** is a block diagram showing interpretability of extracted code from a benign sample.

**Figure 23** is a plot showing interpretability of a benign sample highlighted.

**Figure 24** is a plot showing a non-mutagenic compound with nodes highlighted by a Genetic Algorithm Graph Explainer.

**Figure 25** is a plot showing a mutagenic compound with nodes highlighted by a Genetic Algorithm Graph Explainer.

**Figure 26** is a block diagram showing an example computing device capable of being used with the embodiments described herein.

## DETAILED DESCRIPTION OF THE DRAWINGS

The present disclosure provides a method for determining whether an executable code is a malware comprising: disassembling executable code to create disassembled instructions; extracting instruction blocks from the disassembled instructions; encoding the instruction blocks to create encoded instruction blocks and generating a first data graph, wherein the first data graph comprises nodes, each node from the first data graph being associated with an encoded instruction block; determining for each node an embedding of the encoded instruction block to create a canonical executable graph; classifying the canonical executable graph into either a benign family or a malicious family; and determining that the executable code is a malware when the canonical executable graph belongs to a malicious family.

The present disclosure further provides a computing device configured for determining whether an executable code is a malware, the computing device comprising: a processor; and a memory, wherein the computing device is configured to: disassemble executable code to create disassembled instructions; extract instruction blocks from the disassembled instructions; encoding the instruction blocks to create encoded instruction blocks and generating a first data graph, wherein the first data graph comprises nodes, each node from the first data graph being associated with an encoded instruction block; determining for each node an embedding of the encoded instruction block to create a canonical executable graph; classifying the canonical executable graph into either a benign family or a malicious family; and determining that the executable code is a malware when the canonical executable graph belongs to a malicious family.

The present disclosure further provides a non-transitory computer readable medium for storing instruction code, which, when executed by a processor of a computing device, cause the computing device to: disassemble executable code to create disassembled instructions; extract instruction blocks from the disassembled instructions; encoding the instruction blocks to create encoded instruction blocks and generating a first data graph, wherein the first data graph comprises nodes, each node from the first data graph being associated with an encoded instruction block; determining for each node an embedding of the encoded instruction block to create a canonical executable graph; classifying the canonical executable graph into either a benign family or a malicious family; and determining that the executable code is a malware when the canonical executable graph belongs to a malicious family.

In the embodiments of the present disclosure, a structured pipeline for reverse engineering-based analysis is provided that not only gives promising results compared to the state-of-the-art, but also provides high level interpretability for malicious code blocks as subgraphs.

In particular, a novel representation of Portable Executable (PE) files is introduced, called the Canonical Executable Graph (CEG) herein. This representation inherently incorporates both syntactical and semantics information in its node embeddings, while its edge features capture structural information of PE files.

Such representation for PE files that encapsulates both syntactical and semantic information, as well as structural characteristics, is currently unknown. While previous works primarily focused on either their syntactic or structural properties. This representation may significantly enhance the accuracy of malware behavior detection.

Furthermore, recognizing that existing graph explanation methods within Explainable Artificial Intelligence (XAI) are unsuitable for malware analysis due to the specificity of malicious files, a new model-agnostic graph explainer, called Genetic Algorithm-based Graph Explainer (GAGE) herein, is provided. GAGE is applied to the CEG and aims to identify a precise subgraph capable of faithfully replicating the entire CEG.

As provided through experiments and comparisons with state-of-the-art methods, the proposed pipeline achieves significant improvement in the robustness score, and discriminative power of the model compared to the previous benchmark.

Further, as outlined below, GAGE was successfully implemented in practical applications on real-world data, producing meaningful insights and interpretability. Thus, a robust solution to enhance cybersecurity measures by providing a more transparent and accurate understanding of malware behavior is provided.

**Malware Analysis**

Malware poses an ever-growing threat in the digital landscape, with a 2021 report from VirusTotal indicating a 27% increase in computer viruses in 2021 alone. Concurrently, a 2020 study by Kaspersky highlights the detection of approximately 5.2% of 360,000 new malicious files each day. Traditional malware analysis methods are struggling to cope with the influx of this expanding and increasingly obfuscated malware, as for example described by D. Ucci et al., "Survey of machine learning techniques for malware analysis," Computers & Security, vol. 81, pp. 123-147, 2019, the contents of which are incorporated herein by reference.

In response to these challenges, S. Cesare et al., "Classification of malware using structured control flow," in Proceedings of the Eighth Australasian Symposium on Parallel and Distributed Computing-Volume 107, 2010, pp. 61-70, the contents of which are incorporated herein by reference, proposed a graph-based representation for executable files, aiming to enhance the precision and accuracy of malware behavior identification with a robust explanation.

The motivation behind the embodiments of the present disclosure lies in the potential of graph representations to capture the semantic, syntactical, and flow control aspects of programs and data, thus enabling the more accurate detection of malicious behavior. To achieve this, deep learning techniques are employed for graph classification. However, deep learning models often suffer from the "black-box" drawback, necessitating the development of a state-of-the-art graph classification explanation algorithm tailored specifically for malware analysis.

Malware analysis mainly encompasses two approaches: static and dynamic analysis. These approaches are for example described by R. Sihwail et al., "A survey on malware analysis techniques: Static, dynamic, hybrid and memory analysis," Int. J. Adv. Sci. Eng. Inf. Technol, vol. 8, no. 4-2, pp. 1662-1671, 2018, the contents of which are incorporated herein by reference. The approaches are further described in O. Or-Meir et al., "Dynamic malware analysis in the modern era-a state of the art survey," ACM Computing Surveys (CSUR), vol. 52, no. 5, pp. 1-48, 2019, the contents of which are incorporated herein by reference.

Static analysis involves extracting features from Portable Executable (PE) files, such as numerical attributes, printable strings, and import and export information, as for example described in A. Shalaginov et al., "Machine learning aided static malware analysis: A survey and tutorial," Cyber threat intelligence, pp. 7-45, 2018, the contents of which are incorporated herein by reference.

Dynamic analysis, on the other hand, observes the behavior of a malicious file in a controlled environment, analyzing dynamic features like registry changes, memory utilization, and network activity, as described in O. Or-Meir, *supra*.

While hybrid analysis combines both static and dynamic features, these manual intensive methods face limitations, including their inefficiency in handling the increasing number of malware attacks, struggles in distinguishing between various malware families, and susceptibility to zero-day exploits, obfuscation, or polymorphic malware.

As a result, researchers have shifted towards machine learning-based analysis, as for example described in M. Ijaz et al., "Static and dynamic malware analysis using machine learning," in 2019 16th International Bhurban conference on applied sciences and technology (IBCAST). IEEE, 2019, pp. 687-691, the contents of which are incorporated herein by reference. However, such approach has challenges, including intensive manual feature engineering and the incorporation of various data types, such as images and assembly code. This was for example described in Z. Zhang et al., "Dynamic malware analysis with feature engineering and feature learning," in Proceedings of the AAAI conference on artificial intelligence, vol. 34, no. 01, 2020, pp. 1210-1217, the contents of which are incorporated herein by reference.

Moreover, deep learning methods have been employed but have needed more interpretability and human understanding of model outputs, as for example described in D. Castelvecchi, "Can we open the black box of ai?" Nature News, vol. 538, no. 7623, p. 20, 2016, the contents of which are incorporated herein by reference.

Despite the significant work in automated malware detection, only some studies have thoroughly explored the potential of graph representations for executables. The Control Flow Graph (CFG) is a well-known representation, as for example described in K. D. Cooper et al., "Building a control-flow graph from scheduled assembly code," Tech. Rep., 2002. A further representation is the Data Flow Graph (DFG), as for example described in D. C. Zaretsky et al., "Generation of control and data flow graphs from scheduled and pipelined assembly code," in Languages and Compilers for Parallel Computing: 18th International Workshop, LCPC 2005, Hawthorne, NY, USA, October 20-22, 2005, Revised Selected Papers 18. Springer, 2006, pp. 76-90. The contents of both the Cooper and Zaretsky references are incorporated herein by reference.

However, these representations do not capture the critical function call properties within nodes or blocks. To address this limitation, a new executable representation, the Canonical Executable Graph (CEG), is provided herein, which retains semantic information by processing code blocks using an Attention-based Autoencoder (AED). AED learns the order of instructions and generates embeddings accordingly. Additionally, statistical distributions of opcodes and operands are extracted and combine with AED-generated features to incorporate syntactical information.

Following the generation and classification of CEG, a significant challenge arises in providing interpretable reasoning behind the classification - a crucial aspect for human understanding and practical malware analysis, even without prior knowledge of the model. To address this challenge, a Genetic Algorithm-based Graph Explainer (GAGE) is employed in the embodiments herein, which comprises an explanation extraction method for subgraphs from CEGs, which offers insights into malicious intent code blocks.

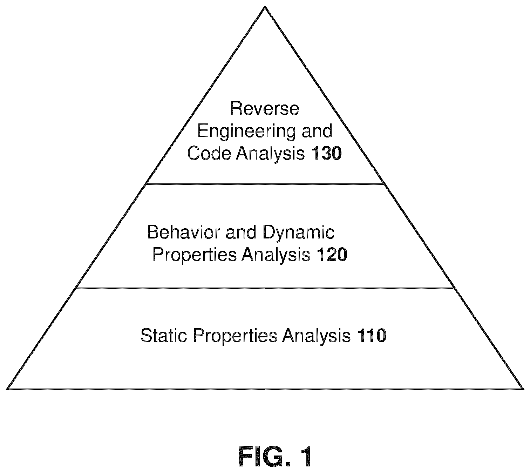

Based on the above, reference is made to **Figure** 1. In the embodiment of **Figure** 1, analysis techniques for malware are shown as a triangle. At the base of the triangle is static properties analysis 110, which involves virus scanning, fingerprinting, memory dumping, artifacts analysis, among other options.

Above this is the behavior and properties analysis **120,** which may involve tracking registry changes, Application Program Interface (API) calls, memory writes, among other functionalities. Analysis **120** may further use call graphs, CFG, among other tools, and the embodiments of the present disclosure using CEG and GAGE are in this area.

Above this is reverse engineering and code analysis **130,** which may involve assembly to high level code conversion.

The embodiments of the present disclosure provide three main aspects.

In a first aspect, a novel representation for PE files is provided, called CEG, which incorporates both syntactical and semantical details into the embedding of its nodes. Notably, CEG is the first executable representation to feature edge attributes that capture the control flow of both external and intra-function calls.

To generate embeddings for the nodes within CEG, the AED was introduced. This model was trained on a dataset comprising one million code blocks, enabling it to efficiently generate block level encodings for assembly code. These embeddings effectively captured fine-grained information on instruction order, semantics, and code intent. In robustness tests, features generated by AED demonstrated superior performance compared to state-of-the-art methods for detecting malware behavior.

In a second aspect, GAGE, a specialized model-agnostic graph explainer designed explicitly for the intricate task of malware behavior detection, was introduced. Operating on CEGs, GAGE employs a genetic algorithm to iteratively refine subgraphs with the primary aim of minimizing the Euclidean distance between the original graph's softmax probability distribution and that of the extracted subgraph. This optimization process enables GAGE to uncover precise subgraphs that capture vital aspects of malware behavior, addressing the limitations faced by previous graph explainers in malware analysis.

Specifically, prior methods, such as gradient-based, surrogate, decomposition-based, and model-level explainers, struggled to provide effective explanations for graph-based malware analysis due to the complexities of malware files, which often encompass mixed content and intricate relationships within graphs.

In contrast, GAGE's innovative approach represents an advancement in malware analysis and graph-based model explainability, successfully bridging the gap between complex malware behavior and interpretable model outputs.

In a third aspect, through experiments and comparisons with state-of-the art methods, the pipeline of the present methods and systems achieves a 31% improvement in robustness score compared to the previous benchmark. This significant enhancement in robustness demonstrates the effectiveness of the approach in distinguishing between different malware families. Additionally, this approach results in a substantial improvement in discriminative power, with a 9% increase in precision, a 7% increase in recall, and a 4% increase in accuracy. These improvements are pivotal for precise malware detection and classification in the ever-evolving threat landscape, making the model of the present disclosure a valuable asset in increasing cybersecurity measures.

The present embodiments provide a comprehensive solution that combines innovative graph-based representations, model-agnostic explanation methods, and improved classification performance to enhance cybersecurity measures. The contributions of CEG and GAGE provide a more transparent and accurate understanding of malware behavior, offering valuable insights for cybersecurity stakeholders.

**Graph in Malware Analysis**

Malware analysis has increasingly incorporated graph-based approaches as they provide valuable insights into function call flows and recurring patterns within executables. Various types of graphs are now employed by researchers for analysis using machine learning and deep learning techniques. For instance, Control Flow Graphs model control flow relationships among code's basic blocks, enabling the detection of malicious behavior by capturing execution paths and control transfers within malicious files. Yan et al. "Classifying malware represented as control flow graphs using deep graph convolutional neural network," in 2019 49th annual IEEE/IFIP international conference on dependable systems and networks (DSN), IEEE, 2019, pp. 52-63, the contents of which are incorporated herein by reference, utilized Graph Convolutional Neural Networks (GCNN) to embed structural information from CFGs, facilitating malware classification.

In a different approach, Nguyen et al. "Autodetection of sophisticated malware using lazy-binding control flow graph and deep learning," Computers & Security, vol. 76, pp. 128-155, 2018, the contents of which are incorporated herein by reference, converted CFGs into images and performed image classification for faster and cost-effective analysis compared to direct CFG analysis. Additionally, they extracted statistical opcode features, created node features in CFG, and conducted classification using Graph Neural Networks (GNN), along with providing explanations for the classification process.

Another commonly used graph is the Call Graph, which illustrates calling relationships between program functions or methods. It reveals how functions invoke each other, offering insights into the execution flow and dependencies within malicious files. This is for example described by Kinable et al. "Malware classification based on call graph clustering," Journal in computer virology, vol. 7, no. 4, pp. 233-245, 2011, the contents of which are incorporated herein by reference, which extracted features and performed graph similarity-based analysis to detect similar patterns in malware. Nevertheless, this approach shares similarities with signature-based malware detection and can be evaded.

Similarly, Hassen et al. "Scalable function call graph-based malware classification," in Proceedings of the Seventh ACM on Conference on Data and Application Security and Privacy, 2017, pp. 239-248, the contents of which are incorporated herein by reference, presented a scalable method for malware detection based on call graph features; however, the features in Hassen lack dynamicity.

Data Flow Graphs (DFGs), on the other hand, track data and variable flows within a program, aiding in the analysis of data manipulation, transformation, and sharing across code segments. This enables the automated identification of potentially malicious data operations or information leakage.

For example, Wuchner et al., "Malware detection with quantitative data flow graphs," in Proceedings of the 9th ACM symposium on Information, computer and communications security, 2014, pp. 271-282, the contents of which are incorporated herein by reference, conducted quantitative heuristic analysis on the data flow of executables, achieving effective malware detection. Similarly, nearly identical analysis using n-gram analysis on DFGs was performed in Wuchner et al "Robust and effective malware detection through quantitative data flow graph metrics," in Detection of Intrusions and Malware, and Vulnerability Assessment: 12th International Conference, DIMVA 2015, Milan, Italy, July 9-10, 2015, Proceedings 12. Springer, 2015, pp. 98-118, [*Wuchner-2*], the contents of which are incorporated herein by reference.

While the algorithms mentioned above have achieved commendable classification and detection levels, they suffer from two significant issues. Firstly, they need to consider the semantic understanding of code analysis within these graphs, a necessity for comprehending executable functionality amidst obfuscation and polymorphism. Secondly, they are black-box algorithms that lack enhanced interpretability for malware analysts or cybersecurity stakeholders.

In contrast, Herath et al., "Cfgexplainer: Explaining graph neural network-based malware classification from control flow graphs," in 2022 52nd Annual IEEE/IFIP International Conference on Dependable Systems and Networks (DSN). IEEE, 2022, pp. 172-184, the contents of which are incorporated herein by reference, discussed explainability and presented it as subgraphs of CFGs. Nevertheless, their approach relied on statistical opcode stratification, susceptible to manipulation through obfuscation or adversarial attacks. Thus, their extracted subgraphs, while offering explainability, may not be as robust as required for diverse malware families and benign samples.

**Explainability Method Challenges**

The field of explainability in graph-based models presents several challenges due to the unique characteristics of graphs, and existing methods have limitations when applied to malware analysis tasks. In this section, various types of explainability algorithms are explored and reasons why they may not be suitable for effectively explaining malware behavior are provided, highlighting the need for the GAGE framework of the present disclosure.

Methods such as Sensitive Analysis (SA) and Guided Backpropagation (GBP), as for example described by F. Baldassarre et al., "Explainability techniques for graph convolutional networks," arXiv preprint arXiv: 1905.13686, 2019, and methods such as Class Activation Mapping (CAM) and Gradient-weighted CAM (Grad-CAM) as described by P. E. Pope et al., "Explainability methods for graph convolutional neural networks," in Proceedings of the IEEE/CVF conference on computer vision and pattern recognition, 2019, pp. 10 772-10 781, are popular gradient and perturbation-based approaches. The contents of Baldassarre and Pope are incorporated herein by reference. However, these methods may face challenges when dealing with malicious files that contain both benign and malicious code.

In such cases, these algorithms could be misled by the benign code, resulting in incomplete or incorrect explanations. Additionally, when the graph comprises benign and malicious nodes and edges, these methods might assign equal importance to both types, leading to diluted explanations that fail to identify key malicious behaviors.

Surrogate methods such as GraphLIME (described by Q. Huang et al., "Graphlime: Local interpretable model explanations for graph neural networks," IEEE Transactions on Knowledge and Data Engineering, 2022, the contents of which are incorporated herein by reference), Relational model explainer (RelEx) (as described by Y. Zhang et al., "Relex: A model-agnostic relational model explainer," in Proceedings of the 2021 AAAI/ACM Conference on AI, Ethics, and Society, 2021, pp. 1042-1049, the contents of which are incorporated herein by reference), and Probabilistic Graphical Model explanations (PGM-Explainer) (described by M. Vu et al., "Pgm-explainer: Probabilistic graphical model explanations for graph neural networks," Advances in neural information processing systems, vol. 33, pp. 12 225-12 235, 2020, the contents of which are incorporated herein by reference) rely on linear classification models, which may not effectively capture the complex and non-linear behavior of malicious files. These files often exhibit mixed behavior, making it challenging for traditional linear models to distinguish between benign and malicious nodes and edges accurately.

Moreover, building surrogate models, such as GraphLIME, typically involves creating many training samples using perturbation techniques. However, applying perturbations to malicious code may not reflect real-world scenarios or provide meaningful insights, limiting the effectiveness of these surrogate models.

Excitation Backpropagation (EB) and GNN-layer-wise Relevance Propagation (LRP) (for example described by T. Schnake et al., "Higher-order explanations of graph neural networks via relevant walks," IEEE transactions on pattern analysis and machine intelligence, vol. 44, no. 11, pp. 7581-7596, 2021, the contents of which are incorporated herein by reference), provide decomposition-based algorithms which may not be suitable for explaining malicious files. These methods often decompose the graph randomly or mask nodes without considering their actual relevance to the file's behavior.

Model-level explanations, such as the XGNN approach described by H. Yuan et al., "Xgnn: Towards model-level explanations of graph neural networks," in Proceedings of the 26th ACM SIGKDD International Conference on Knowledge Discovery & Data Mining, 2020, pp. 430-438, the contents of which are incorporated herein by reference, may not capture the intricate interactions between different nodes and edges crucial for understanding malicious behavior at the local or file level. XGNN, based on reinforcement learning, requires the selection of a starting node to generate explanations or subgraphs. This approach may overlook isolated nodes or graphs not directly connected to the selected node, limiting its ability to provide comprehensive insights into malware behavior.

Therefore, existing explainability methods face challenges in effectively elucidating malicious behavior in graph-based malware analysis. These challenges arise due to the complex nature of malware files, which often contain mixed content and intricate relationships between graph elements.

Therefore, in accordance with the embodiments of the present disclosure, the proposed GAGE framework aims to address these limitations and provide robust explanations tailored to the unique characteristics of malware graphs.

**Construction Issues**

The present disclosure addresses issues centered around the analysis and interpretation of disassembled binary code.

A first issue revolves around constructing a CEG from disassembled binary code. One goal is to represent the code as a numerical vector in the form of features for graph nodes while capturing the semantic and flow aspects of code blocks through graph edge features. Mathematically, let be the constructed CEG, where represents the set of graph nodes, each corresponding to a code block, and denotes the set of graph edges, signifying relationships between code blocks.

For each node $v_i \in V$, feature vectors $X_i$ may be extracted such that:

$$X_i = FeatureExtractor(v_i), \forall v_i \in V \qquad (1)$$

Additionally, the semantics and flow between code blocks may be captured as edge features $E_{ij}$ such that:

$$E_{ij} = EdgeFeatureExtractor(v_i, v_j), \forall (v_i, v_j) \in E \qquad (2)$$

A second issue entails the classification of the constructed CEGs into malicious or benign families. For this, a GCNN may be employed for the classification task. Formally, this may be expressed as, given a set of CEGs $\{G_1, G_2, ..., G_N\}$, each annotated with a class label $y_i$, where $y_i = 1$ indicates a malicious family and $y_i = 0$ represents a benign family, a classifier $f$ may be learned that maps CEGs to class labels as:

$$f(G_i) \rightarrow y_i, \forall G_i \in \{G_1, G_2, ..., G_N\} \qquad (3)$$

Thus, an objective is to train a GCNN model to minimize the classification loss:

$$\mathcal{L} = -\frac{1}{N} \sum_{i=1}^{N} (y_i \cdot \log(f(G_i)) + (1 - y_i) \cdot \log(1 - f(G_i))) \qquad (4)$$

A third issue addresses the interpretability of the classification results by generating subgraphs of CEGs that highlight key code blocks responsible for classification decisions. GAGE is introduced to perform this task. Formally, subgraphs $G_s$ that provide meaningful insights into the classification process may be extracted from CEGs G such that:

$$G_s = GAGE(G, f(G), y_i), \forall G \in \{G_1, G_2, ..., G_N\} \qquad (5)$$

Where $f(G)$ represents the classification output for CEG $G$, and $y_i$ is the true class label for $G_i$.

**CEG Construction**

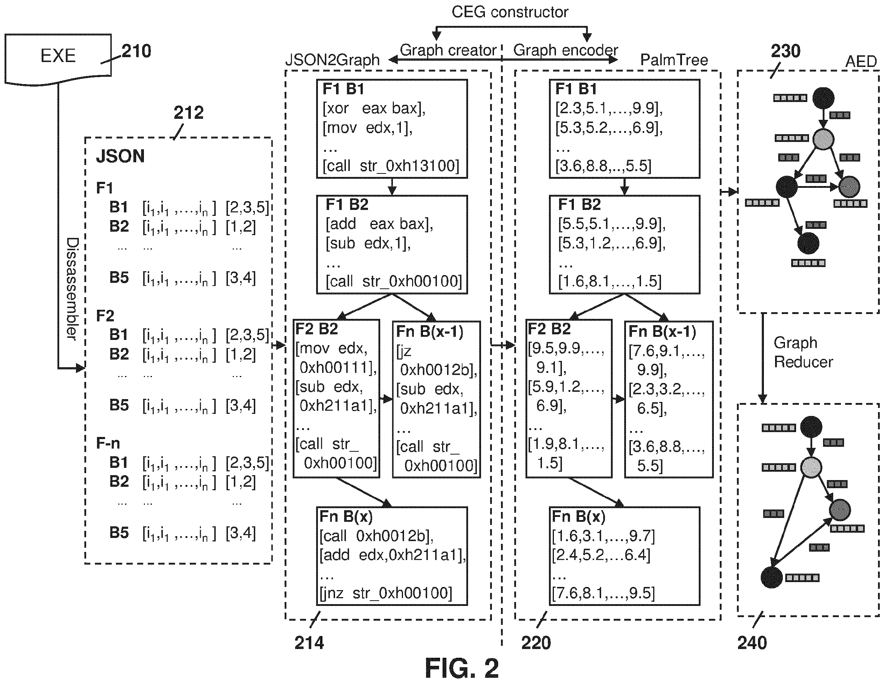

Reference is now made to **Figure 2**. An initial phase of the model development involves constructing the Canonical Executable Graph (CEG) through a multi-step process, which can be divided into two main components: first, feature extraction for nodes and second, edge features. Each is described below.

*Feature Extraction for Nodes*

Portable Executable (PE) files **210** may be disassembled, for example using a tool such as IDA Pro, to create disassembled instructions **212.** In the example figure one comma the disassembled instructions **212** are shown as JavaScript Object Notation (JSON) instructions. However, this is merely provided as an example and other formats for the disassembled instructions are also possible.

Next, blocks of assembly instructions within functions may be extracted, shown as instruction blocks **214.** In the example of **Figure 2,** the graph creator is a JSON2Graph graph creator. However other options for graph creation are possible.

These instruction blocks **214** are then processed, for example using the PalmTree library. PalmTree is a pre-trained model on assembly language that has been trained extensively on CFG and DFG to capture semantic information, as for example described by X. Li et al., "Palmtree: learning an assembly language model for instruction embedding," in Proceedings of the 2021 ACM SIGSAC Conference on Computer and Communications Security, 2021, pp. 3236-3251, the contents of which are incorporated herein by reference. However, other models may equally be used, and PalmTree is merely provided as one example of a graph encoder. The results of the processing are shown in **Figure 2** as encoded instruction blocks **220.**

The next step involves converting and reducing the dimensionality of these embeddings at the block level. However, directly aggregating or applying weighted sums to instruction-level embeddings is unsuitable, as it neglects the sequence's inherent order, potentially resulting in information loss.

To address this challenge, AED was developed. AED is a model that combines the strengths of traditional autoencoders and sequence-to-sequence models, incorporating an attention mechanism to adaptively focus on different parts of the input sequence during encoding and decoding. The AED architecture comprises two main components, an attention encoder **230** and a decoder **240.**

Attention encoder **230** employs Convolutional Neural Networks (ConvNets) to capture spatial features within the assembly code sequence. Subsequently, a self-attention mechanism assigns varying weights to sequence segments based on their significance. Mathematically, the encoder's output ($E_O$) can be expressed as:

$$E_O = Attention\big(Conv1D(B(m,n)\big) \qquad (6)$$

Where $B(m,n)$ represents an encoded instruction block 220 (i.e. the embedding of a block generated by the graph encoder such as PalmTree), where m denotes the number of instructions, and each instruction has an embedding of size $n$. Hence, $E_O$ can be viewed as the embedding of an encoded instruction block.

The decoder **240** takes the encoded representation (i.e. the encoder's output which belongs to the latent space) and reconstructs the original input sequence using a one-dimensional convolution operation such as Conv1DTranspose layers. Similar to the attention encoder **230,** it employs the attention mechanism to ensure that the generated output focuses on relevant portions of the encoded representation. The decoder's output, which is the reconstruction of instruction embeddings ($R_o$) from the input ($E_o$), can be defined as:

$$R_o = Conv1DTranspose\big(Attention(E_o)\big) \qquad (7)$$

After training AED, a feature of the Node can be obtained as:

$$F_{Node} = Encoder\big(B(m,n)\big) \qquad (8)$$

where *Encoder* is the encoder from the trained AED.

The generated feature vector ($F_{Node}$) captures the characteristics of corresponding assembly instruction sequences in a lower-dimensional embedding space, retaining essential information such as opcode details, operand types, and operand values. The attention mechanism enables the model to emphasize critical instructions and their relationships, capturing local and global dependencies within the code. Once trained, the AED can obtain embeddings for assembly code sequences.

*Edge Definitions*

Edges within a CEG are important in representing control-flow and data-flow relationships between code blocks, which may be necessary for understanding software control flow. Edges may be defined based on consequent edges; conditional/fallthrough edges; intra-function edges; and external edges. Each is described below.

Consequent edges ($E_C$) link the last block of a function to the first block of the following function, indicating sequential execution.

Conditional/fallthrough edges ($E_{Cond}$) represent control-flow decisions, reflecting branching within code blocks. Specific conditions determine these edges.

Intra-function edges ($E_{Intra}$) exist within a single function and capture local control flow. They connect blocks based on control dependencies.

External edges ($E_{External}$) connect code blocks across different functions or program units, signifying interactions between them. These edges provide insights into inter-procedural control flow and data flow, facilitating a deeper understanding of how various parts of the software collaborate or communicate.

Mathematically, the embedding of an edge can be represented as a vector incorporating all the Booleans, such as:

$$F_{Edge} = [E_C, E_{Cond}, E_{Intra}, E_{External}] \qquad (9)$$

CEG construction involves the extraction of node features representing code block characteristics and the definition of edges to model control-flow relationships. This mathematical representation of software structure and behavior, enhanced by features and edges, enables diverse software analysis tasks, including malware analysis.

**CEG Classification**

In accordance with the embodiments of the present disclosure, the classification of Canonical Executable Graphs (CEGs) into benign and malicious families is provided. To achieve this, a Graph Convolutional Neural Network (GCNN) is used. The GCNN is a robust framework designed for graph-based data classification.

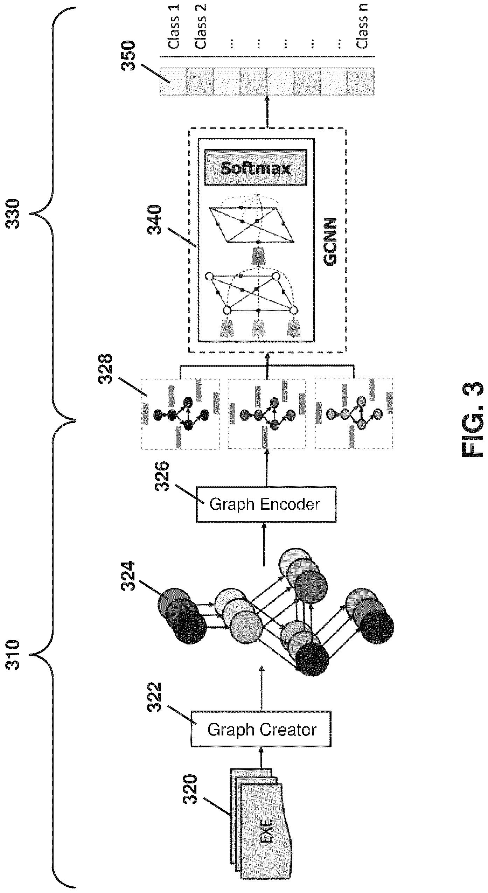

Reference is now made to **Figure 3**. In the embodiment of **Figure 3**, CEG constructor **310** comprises PEs **320** being disassembled, and a graph being created using a graph creator **322.**

This creates a graph **324** which may be encoded using a graph encoder **326** to create CEGs **328.** This is similar to the process of **Figure 2**.

Further, as provided in the embodiment of **Figure 3**, a GAGE portion 330 is provided. GAGE portion **330** comprises a GCNN model **340.**

The architecture of an example of the GCNN model **340** is summarized in Table 1, providing an overview of its layers, output shapes, and associated parameters.

**TABLE 1: Architecture of DGCNN**

| Layer | Parameters |
|---|---|
| Input | N/A |
| Graph convolution | N/A |
| Graph pooling | N/A |
| Convolutional Layer | Filters = 16, Kernel Size = sum(layer sizes), Strides = sum(layer sizes) |
| Max pooling | Pool Size = 2 |
| Convolutional Layer | Filters = 32, Kernel Size = 5, Strides = 1 |
| Dense | Units = 128, Activation = "relu" |
| Dropout | Dropout rate = 0.5 |
| Output | Activation (Softmax) |

Thus, following the process outlined in **Figure 1** for CEG generation, the GCNN architecture **340,** as depicted in Table I, for graph-based classification is employed. This architecture incorporates graph convolutional layers, convolutional layers, max-pooling operations, and fully connected layers, collectively enabling the model to capture intricate relationships within the graph data.

The training of the model was carried out in a batch-based manner, with early stopping mechanisms in place to prevent overfitting. Model performance was rigorously evaluated using an independent test dataset, and critical metrics, including accuracy, loss, precision, recall, and F1-score, were computed for comprehensive assessment.

This results in classification **350.**

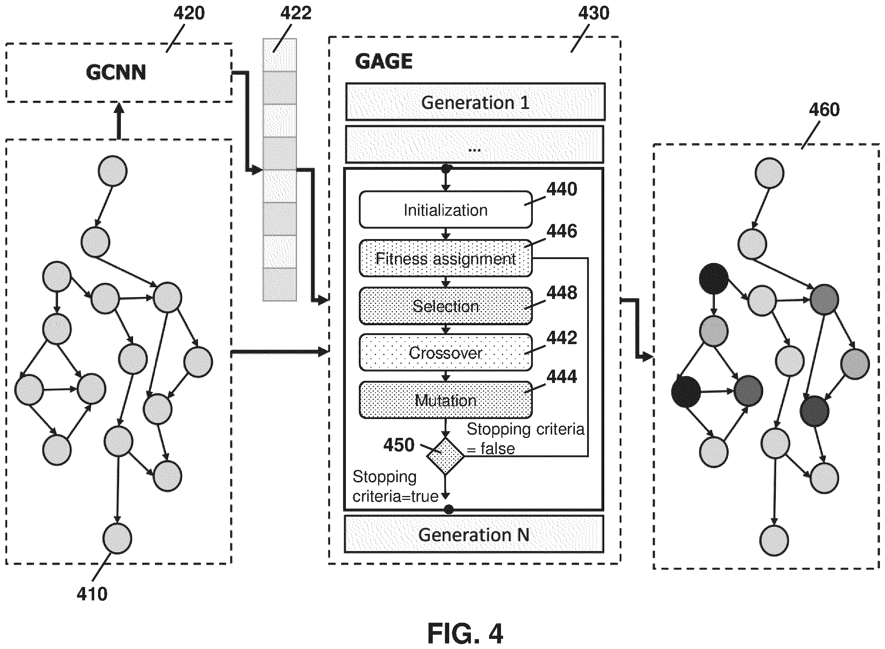

Further, referring to **Figure 4,** the CEG **410** is provided to GCNN **420,** which produces classifications **422.**

The classifications **422,** as well as CEG **410,** are provided to GAGE block **430.** Specifically, a genetic algorithm (GA) approach may be used to enhance graph-based classification through subgraph extraction. The GA iteratively optimizes subgraphs based on a fitness function derived from softmax probabilities obtained during the classification of the original graph The GA comprises several steps, which are detailed mathematically below.

For each generation of the GAGE block **430,** an initialization **440** occurs, which involves encoding the subgraph. Specifically, given a parent graph $G_p$ with a set of edges, we represent a subgraph $G_s$ as a chromosome $C$ of length $L$. Each element $C_i$ within the chromosome corresponds to an edge index from the encoding scheme. The encoding process, including the use of an *EdgeMapping* to relate edge indices to actual edges, is defined as:

$$C = [C_1, C_2, ..., C_L] \qquad (10)$$

where $C_i$ is an integer representing an edge index, and *EdgeMapping*($C_i$) maps it to an edge in $G_p$.

Further, crossover may occur at block **442.** Crossover is a genetic operator that combines the chromosomes of two-parent subgraphs, $C_a$ and $C_b$, to generate a child chromosome $C_c$. The crossover operation can be formulated as follows:

$$C_c = Crossover(C_a, C_b) \qquad (11)$$

Mutation may occur at block **444.** Mutation introduces diversity into the population by randomly altering specific elements within a chromosome. The mutated chromosome $C_m$ may be expressed as:

$$C_m = Mutation(C, mutation\_rate) \qquad (12)$$

Decoding and fitness calculation may occur at block **446.** The decoding process constructs a decoded subgraph $G_d$ from the chromosome C using an encoding-decoding mapping function. This mapping translates edge indices back to their respective edges in the parent graph $G_p$ using the *EdgeMapping*:

$$G_d = Decode(C, EdgeMapping) \qquad (13)$$

Fitness evaluation measures the quality of the decoded subgraph $G_d$ concerning its classification performance. The fitness function may be defined as the Euclidean distance between the softmax probabilities of $G_d$ and $G_p$, calculated across all classes:

$$Fitness(G_d, G_p) = \sqrt{\sum_{i=1}^{N} (P_i - C_i)^2} \qquad (14)$$

where N represents the number of classes, $P_i$ is the softmax probability of class *i* for $G_p$, and $C_i$ is the softmax probability of class *i* for $G_d$.

The selection of the fittest individuals may occur at block **448.** The selection process identifies the fittest subgraphs within the population based on their computed fitness values. The top $N_{top}$ subgraphs, corresponding to the lowest fitness values, are chosen to proceed to the next generation.

The process of **Figure 4** is iterative, as seen at decision block **450,** which decides whether stopping criteria have been met. In particular, to evolve the population towards subgraphs with improved classification performance, crossover, mutation, and selection are applied iteratively. This iterative process continues for a specified number of generations, resulting in the generation of increasingly optimized subgraphs.

Based on the processing of GAGE block **430,** a classified graph **460** is created.

The classified graph can then be used for malware identification in some cases. In some cases, the classified graph can then be used for malware blocking, for example in anti-virus software. In some cases, thee classified graph can be used for research purposes to identify sources and types of malware. Other uses of the classified graph are possible.

**Results**

The model of **Figures 2** to **4** was evaluated against real world data. In particular, the dataset used included malicious executables obtained from MalShare and VirusShare. Such dataset comprised 612 benign files (13.6GB) and 1,799 malicious files (15.1GB) attributed to the Bladabindi, Bundlore, Downloadadmin, Emotet, Gamarue, and Firseria malware families.

IDA Pro6, a commercial disassembler, was used to disassemble the compiled executables and obtain the corresponding assembly functions.

To train the AED, a dataset consisting of 0.8 million assembly code blocks was employed, with each block limited to a maximum of 512 instructions. On average, each CEG comprised 546 nodes and 3,567 edges.

For the model evaluation, the dataset was divided into an 80-20% train-test split. Subsequently, the training set was further split into an 80-20% training-validation split for model development and validation.

*Discriminative Power Analysis*

A comparative analysis of the performance of the GAGE model of the present disclosure against the state-of-the-art CFGExplainer is provided. The discriminative power of each was evaluated using precision (P), recall (R), and F1-Score (F1) metrics for various malware families. The results are summarized in Table 2 below.

**TABLE 2: Discriminative Power Metrics**

| Malware Family | Algorithm | Precision | Recall | F1-Score |
|---|---|---|---|---|
| Gamarue | CFGExplainer | 0.46 | 0.25 | 0.32 |
| | GAGE | 0.68 | 0.44 | 0.53 |
| Firseria | CFGExplainer | 0.93 | 0.98 | 0.95 |
| | GAGE | 0.98 | 0.98 | 0.98 |

(continued)

| Malware Family | Algorithm | Precision | Recall | F1-Score |
|---|---|---|---|---|
| Bundlore | CFGExplainer | 1.00 | 0.94 | 0.97 |
| | GAGE | 1.00 | 0.96 | 0.98 |
| Emotet | CFGExplainer | 0.95 | 0.89 | 0.92 |
| | GAGE | 0.89 | 0.86 | 0.88 |
| Benign | CFGExplainer | 0.69 | 0.84 | 0.76 |
| | GAGE | 0.75 | 0.89 | 0.81 |
| Downloadadmin | CFGExplainer | 0.93 | 0.98 | 0.96 |
| | GAGE | 0.96 | 0.99 | 0.97 |
| Bladabindi | CFGExplainer | 0.72 | 0.60 | 0.65 |
| | GAGE | 1.00 | 0.83 | 0.91 |
| **Average** | **CFGExplainer** | **0.81** | **0.78** | **0.79** |
| | **GAGE** | **0.90** | **0.85** | **0.87** |
| **Accuracy** | **CFGExplainer** | **0.83** | | |
| | **GAGE** | **0.87** | | |

The classification performance for each malware family individually is examined, using the following formulas:

$$Precision = \frac{TP}{TP + FP} \tag{15}$$

$$Recall = \frac{TP}{TP + FN} \tag{16}$$

$$F1 - Score = \frac{2 \cdot Precision \cdot Recall}{Precision + Recall} \tag{17}$$

Where *TP* is the number of true positives; *FP* is the number of false positives; and *FN* is the number of false negatives.

From Table 2, it can be seen that GAGE outperforms CFGExplainer for almost every malware family regarding precision, recall, and F1-Score.

To provide an overall assessment, the average precision, recall, and F1-Score was calculated across all malware families, according to the following equations.

$$AveragePrecision = \frac{1}{N}\sum_{i=1}^{N} Precision_i \tag{18}$$

$$AverageRecall = \frac{1}{N}\sum_{i=1}^{N} Recall_i \tag{19}$$

$$AverageF1 - Score = \frac{1}{N}\sum_{i=1}^{N} F1 - Score_i \tag{20}$$

Where $N$ is the number of malware families; $Precision_i$, $Recall_i$, and $F1$ - $Score_i$ are the precision, recall, and F1-Score values for the i-th malware family.

Here, GAGE consistently demonstrates superior performance compared to CFGExplainer, with higher values for precision, recall, and F1-Score. In terms of accuracy, which represents the overall classification correctness, GAGE achieves a higher accuracy score compared to CFGExplainer.

The results of the performance evaluation indicate that GAGE outperforms CFGExplainer across multiple malware families, achieving higher precision, recall, F1-Score, and accuracy. These findings underscore the effectiveness of the model of the present disclosure in the context of malware classification. GAGE's superior discriminative power makes it a valuable tool for identifying and classifying various malware families, providing enhanced security in the face of evolving threats.

*Robustness Assessment*

To assess the robustness of the explanations generated in subgraphs, various features from these subgraphs were extracted, as defined in Table 3.

**TABLE 3: Extracted Subgraph Feature to Calculate Robustness Score**

| Feature | Description |
|---|---|
| Average node features | The average of node features |
| Edge Count | The total number of edges in the graph. |
| Self-Loop Count | The number of self-loops in the graph. |
| Minimum Degree | The minimum degree of nodes in the graph. |
| Minimum In-Degree | The minimum in-degree of nodes in the graph. |
| Minimum Out-Degree | The minimum out-degree of nodes in the graph. |
| Average Degree | The average degree of nodes in the graph. |
| Average In-Degree | The average in-degree of nodes in the graph. |
| Average Out-Degree | The average out-degree of nodes in the graph. |
| Maximum Degree | The maximum degree of nodes in the graph. |
| Maximum In-Degree | The maximum in-degree of nodes in the graph. |
| Maximum Out-Degree | The maximum out-degree of nodes in the graph. |

Subsequently, the Minimum Mean Discrepancy (MMD) score was computed as a measure of robustness. The MMD between two sets of data may be calculated using the following equation:

$$M M D(X,Y) = \left\| \frac{1}{n_X} \sum_{i=1}^{n_x} \phi(x_i) - \frac{1}{n_Y} \sum_{j=1}^{n_Y} \phi(y_j) \right\|_2^2 \qquad (21)$$

In equation (21), $X$ and $Y$ are the data points to be compared; $n_X$ and $n_Y$ are the number of data points in sets $X$ and $Y$, respectively; $\phi(\cdot)$ is a feature map that maps data points into a higher-dimensional space; and $\|\cdot\|_2$ denotes the Euclidean norm (L2 norm), the square root of the sum of squared values.

The MMD measures the difference between the feature distributions of the two datasets $X$ and $Y$. It quantifies how well the data points from $X$ and $Y$ are separated in the feature space defined by $\phi(\cdot)$. The smaller the MMD value, the more similar the distributions of $X$ and $Y$ are in the feature space.

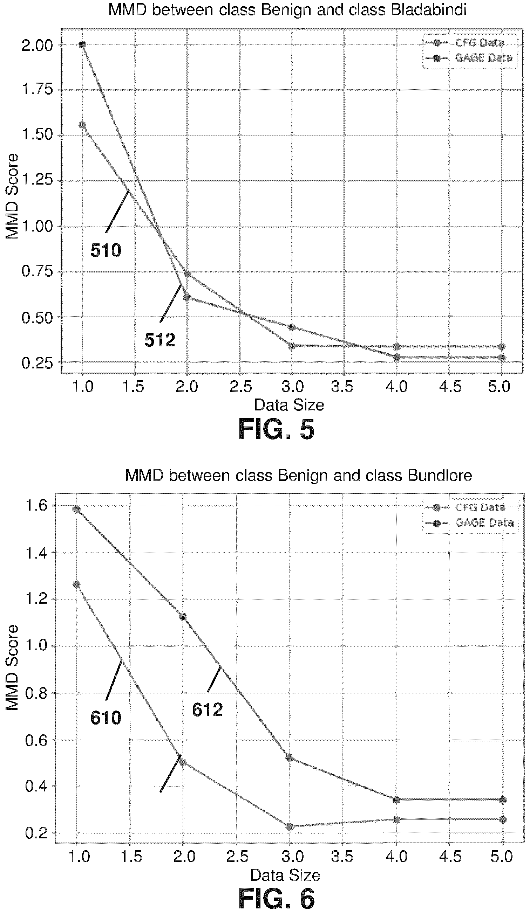

In **Figures 5** to **10,** the robustness scores compared across different malware families are presented for varying numbers of extracted subgraphs. Based on these figures, the algorithms of the present embodiments consistently achieve high robustness scores across most scenarios, with a few exceptions.

In particular, **Figure 5** represents the MMD between class Benign and class Bladabindi, comparing CFG Data **510** with GAGE Data **512.**

**Figure 6** represents the MMD between class Benign and class Bundlore, comparing CFG Data **610** with GAGE Data **612**.

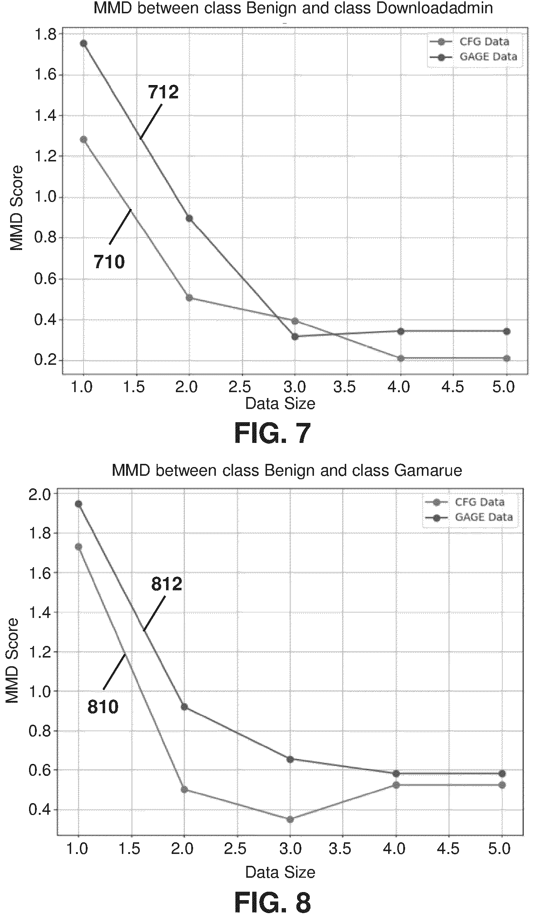

**Figure 7** represents the MMD between class Benign and class Downloadadadmin, comparing CFG Data **710** with GAGE Data **712**.

**Figure 8** represents the MMD between class Benign and class Gamarue, comparing CFG Data **810** with GAGE Data **812**.

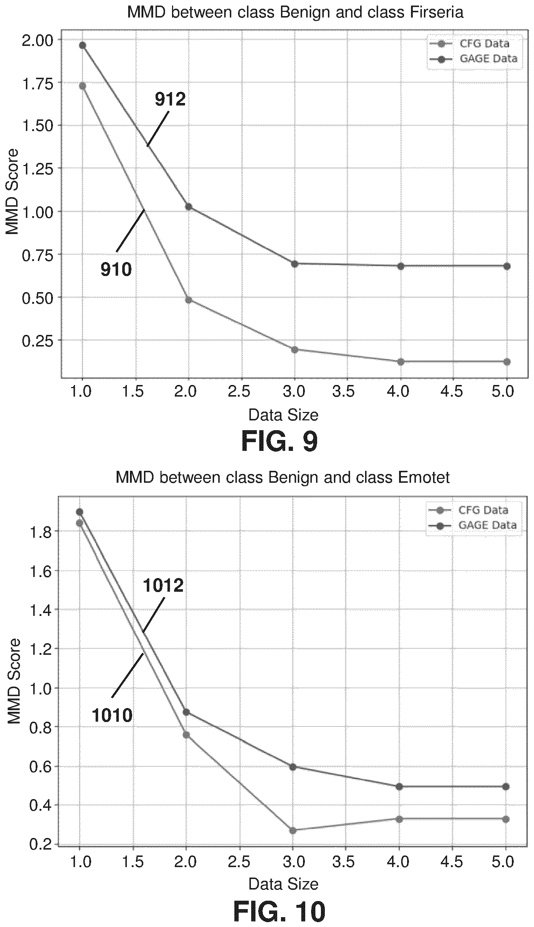

**Figure 9** represents the MMD between class Benign and class Firseria, comparing CFG Data **910** with GAGE Data **912**.

**Figure 10** represents the MMD between class Benign and class Emotet, comparing CFG Data **1010** with GAGE Data **1012**.

Similarly, a comparative analysis was conducted among different malware families. Based on the results of the comparative analysis, comparatively better robustness scores were observed for algorithm of the present disclosure.

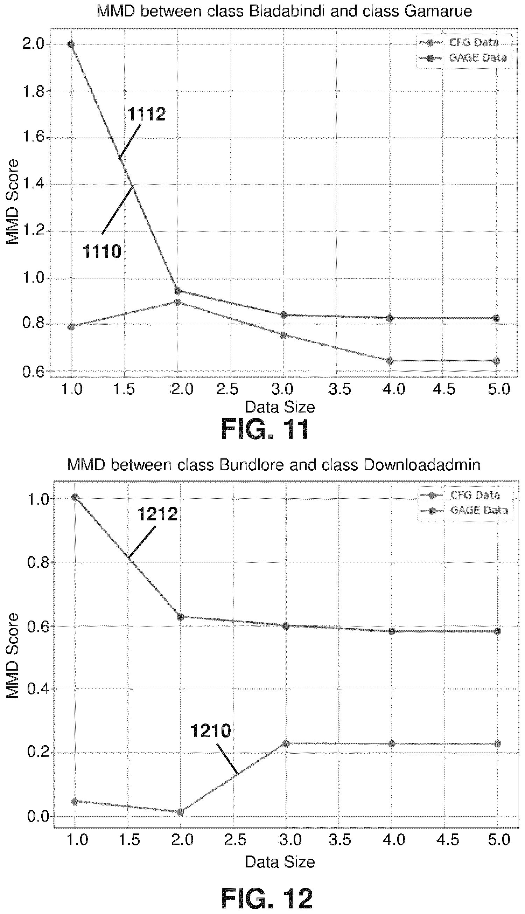

Specifically, **Figure 11** represents the MMD between class Bladabindi and class Gamarue, comparing CFG Data **1110** with GAGE Data **1112**.

**Figure 12** represents the MMD between class Bundlore and class Downloadadadmin, comparing CFG Data **1210** with GAGE Data **1212**.

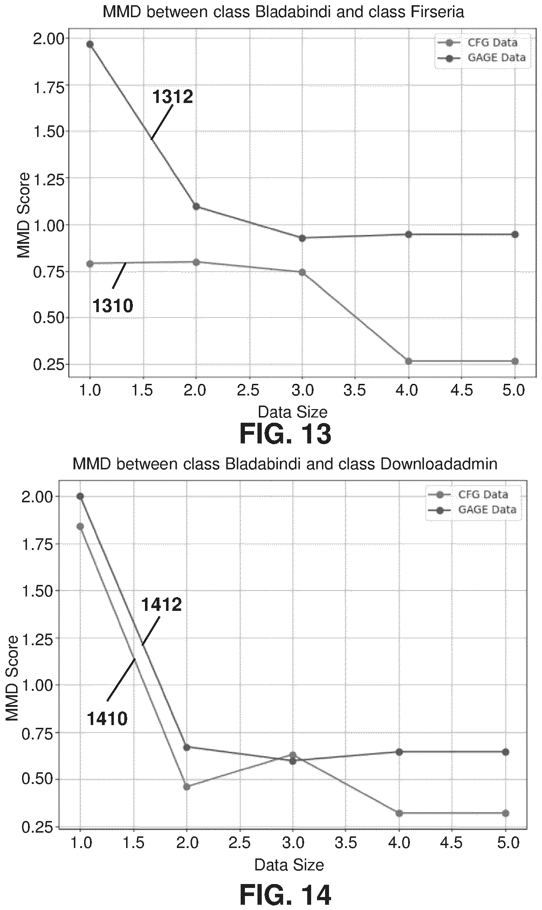

**Figure 13** represents the MMD between class Bladabindi and class Firseria, comparing CFG Data **1310** with GAGE Data **1312**.

**Figure 14** represents the MMD between class Bladabindi and class Downloadadadmin, comparing CFG Data **1410** with GAGE Data **1412**.

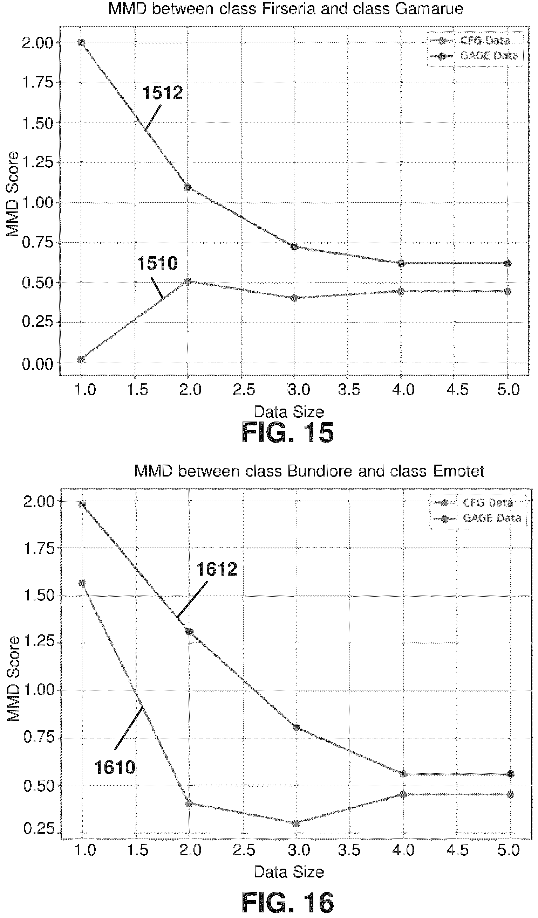

**Figure 15** represents the MMD between class Firseria and class Gamarue, comparing CFG Data **1510** with GAGE Data **1512**.

**Figure 16** represents the MMD between class Bundlore and class Emotet, comparing CFG Data **1610** with GAGE Data **1612**.

Table 4 displays the robustness scores between all benign and malware families across different data sizes. The average for each combination was also calculated and a final average was found to facilitate a direct comparison between CFGExplainer and GAGE. The results of Table 4 show that CFGExplainer achieves a 61.82% robustness score, while GAGE attains a 92.67% robustness score, signifying its better performance.

**TABLE 4: Robustness Scores Across Classes and Comparison Between CFGExplainer And GAGE Using Varying Data Sizes (1 To 5 Subgraphs)**

| Class 1 | Class 2 | Model | #1 | #2 | #3 | #4 | #5 | Avg. |
|---|---|---|---|---|---|---|---|---|
| Benign | Bladabindi | CFGExplainer | 1.5543 | 0.7369 | 0.3386 | 0.3330 | 0.3330 | 0.6591 |
| | | GAGE | 1.9994 | 0.6033 | 0.4411 | 0.2763 | 0.2763 | 0.7192 |
| Benign | Bundlore | CFGExplainer | 1.2645 | 0.5018 | 0.2267 | 0.2567 | 0.2567 | 0.5012 |
| | | GAGE | 1.5844 | 1.1256 | 0.5205 | 0.3411 | 0.3411 | 0.7825 |
| Benign | Downloadadmin | CFGExplainer | 1.2816 | 0.5052 | 0.3944 | 0.2092 | 0.2092 | 0.5199 |
| | | GAGE | 1.7533 | 0.8976 | 0.3156 | 0.3424 | 0.3424 | 0.7302 |
| Benign | Emotet | CFGExplainer | 1.8396 | 0.7594 | 0.2701 | 0.3300 | 0.3300 | 0.7058 |
| | | GAGE | 1.8969 | 0.8744 | 0.5971 | 0.4938 | 0.4938 | 0.8712 |
| Benign | Firseria | CFGExplainer | 1.7296 | 0.4858 | 0.1948 | 0.1239 | 0.1239 | 0.5316 |
| | | GAGE | 1.9665 | 1.0273 | 0.6955 | 0.6822 | 0.6822 | 1.0107 |
| Benign | Gamarue | CFGExplainer | 1.7305 | 0.5022 | 0.3511 | 0.5241 | 0.5241 | 0.7264 |
| | | GAGE | 1.9470 | 0.9196 | 0.6569 | 0.5819 | 0.5819 | 0.9374 |
| Bladabindi | Bundlore | CFGExplainer | 1.8360 | 0.4603 | 0.2071 | 0.1261 | 0.1261 | 0.5511 |
| | | GAGE | 1.9999 | 0.5140 | 0.2462 | 0.3097 | 0.3097 | 0.6759 |
| Bladabindi | Downloadadmin | CFGExplainer | 1.8382 | 0.4594 | 0.6298 | 0.3204 | 0.3204 | 0.7136 |
| | | GAGE | 1.9999 | 0.6702 | 0.5973 | 0.6438 | 0.6438 | 0.9110 |
| Bladabindi | Emotet | CFGExplainer | 1.2777 | 0.3283 | 0.4564 | 0.3322 | 0.3322 | 0.5453 |
| | | GAGE | 1.9998 | 1.0183 | 0.6879 | 0.6539 | 0.6539 | 1.0027 |

(continued)

| Class 1 | Class 2 | Model | #1 | #2 | #3 | #4 | #5 | Avg. |
|---|---|---|---|---|---|---|---|---|
| Bladabindi | Firseria | CFGExplainer | 0.7900 | 0.7978 | 0.7438 | 0.2661 | 0.2661 | 0.5727 |
| | | GAGE | 1.9677 | 1.0948 | 0.9265 | 0.9453 | 0.9453 | 1.1759 |
| Bladabindi | Gamarue | CFGExplainer | 0.7897 | 0.8955 | 0.7546 | 0.6432 | 0.6432 | 0.7452 |
| | | GAGE | 1.9997 | 0.9440 | 0.8394 | 0.8268 | 0.8268 | 1.0873 |
| Bundlore | Downloadadmin | CFGExplainer | 0.0474 | 0.0134 | 0.2293 | 0.2275 | 0.2275 | 0.1490 |
| | | GAGE | 1.0054 | 0.6276 | 0.6003 | 0.5814 | 0.5814 | 0.6792 |
| Bundlore | Emotet | CFGExplainer | 1.5655 | 0.4064 | 0.3020 | 0.4533 | 0.4533 | 0.6361 |
| | | GAGE | 1.9783 | 1.3101 | 0.8047 | 0.5597 | 0.5597 | 1.0425 |
| Bundlore | Firseria | CFGExplainer | 1.9635 | 0.6627 | 0.4492 | 0.2553 | 0.2553 | 0.7172 |
| | | GAGE | 1.9996 | 1.3952 | 1.0323 | 0.8830 | 0.8830 | 1.2386 |
| Bundlore | Gamarue | CFGExplainer | 1.9635 | 0.7297 | 0.6004 | 0.6913 | 0.6913 | 0.9352 |
| | | GAGE | 1.7730 | 1.2301 | 0.8073 | 0.5595 | 0.5595 | 0.9858 |
| Downloadadmin | Emotet | CFGExplainer | 1.5591 | 0.3978 | 0.3856 | 0.3957 | 0.3957 | 0.6267 |
| | | GAGE | 1.9933 | 1.0467 | 0.6443 | 0.5345 | 0.5345 | 0.9506 |
| Downloadadmin | Firseria | CFGExplainer | 1.9642 | 0.6613 | 0.4227 | 0.1993 | 0.1993 | 0.6893 |
| | | GAGE | 1.9999 | 1.1094 | 0.7824 | 0.6798 | 0.6798 | 1.0502 |
| Downloadadmin | Gamarue | CFGExplainer | 1.9640 | 0.7309 | 0.5814 | 0.3988 | 0.3988 | 0.8147 |
| | | GAGE | 1.9856 | 0.9951 | 0.6359 | 0.5105 | 0.5105 | 0.9275 |
| Emotet | Firseria | CFGExplainer | 1.8384 | 0.6343 | 0.3215 | 0.2616 | 0.2616 | 0.6634 |
| | | GAGE | 1.6169 | 0.5967 | 0.5186 | 0.5031 | 0.5031 | 0.7476 |
| Firseria | Gamarue | CFGExplainer | 0.0177 | 0.5050 | 0.3986 | 0.4432 | 0.4432 | 0.3615 |
| | | GAGE | 1.9997 | 1.0946 | 0.7195 | 0.6155 | 0.6155 | 1.0089 |
| | Average | CFGExplainer | | | | | | 0.6182 |
| | | GAGE | | | | | | 0.9267 |

## Interpretability Analysis

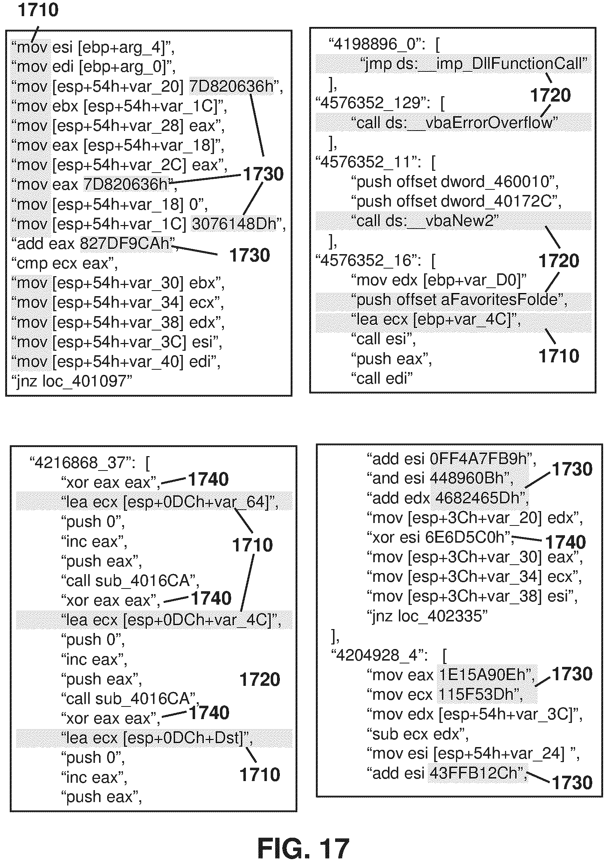

Malware frequently utilizes code obfuscation techniques to obstruct static analysis and elude detection mechanisms. A prominent instance from the extracted code blocks involves the application of Exclusive OR (XOR) operations, which are commonly used for straightforward data encoding and decoding. Additionally, the employment of arithmetic and logic instructions, such as Rotate Left (ROL) and Rotate Right (ROR), particularly within loops, is discernible in the extracted code, potentially signaling a decoding routine. Specific obfuscation instructions have been observed in several examples from the Firseria, Emotet, and DownloadAdmin families, as illustrated in Figure 17.

In particular, **Figure 17** shows, the Gamarue, and Fiseria malware families, with reference **1710** showing extensive use of MOV commands, reference **1720** showing dynamic calls, reference **1730** showing magic numbers used in malicious code, and reference **1740** showing XOR obfuscation techniques by malicious files.

With regard to evasion techniques, in the embodiments of the present disclosure the GAGE model identifies blocks that unveil evasion tactics, notably the employment of jump instructions to formulate a complex CFG, thereby complicating static analysis. For example, dynamic jumps and potentially packed or encrypted payloads, exemplified by *jmp : ds : imp DllFunctionCall* in the Gamarue family, are deemed suspicious as they are frequently utilized to circumvent detection and analysis. Such instructions suggest the executable's use of external libraries or functions, potentially engaging with system-level functionalities or interacting with other processes.

With regard to data manipulation, data and memory management play a crucial role in the functioning of malware. A prevalent utilization of MOV and LEA instructions was noted, which might be engaged in transferring malicious payloads or altering memory addresses. Moreover, employing TEST, CMP, and conditional jump instructions, such as JNZ, JZ, and JB, could establish conditional logic derived from the manipulated data. Notably, in the extracted code from the Gamarue family, an extensive use of MOV commands was observed, as seen in **Figure 17.**

With regard to unpacking, shellcode, or payload execution, recognizing patterns that suggest shellcode execution or the Unpacking of additional payloads may be vital. This may encompass a blend of memory operations, function calls, and jumps that execute data in memory. For example, the utilization of hardcoded values, often in hexadecimal, might be linked with specific operations, and magic numbers are atypical for benign applications. Such signs were observed in the Gamarue family samples of **Figure 17.** The Firseria samples display an unusual quantity of calls, jumps, and conditional checks. While stack operations are common, they can also be employed in shellcode or to set up function calls with particular arguments.

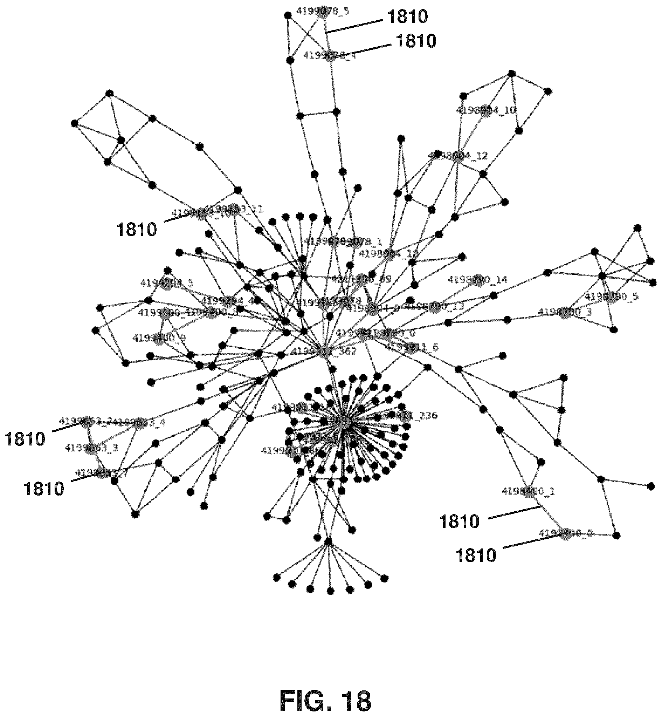

This is shown graphically with regard to **Figures 18** to **21.**

In particular, **Figure 18** provides a graph for the Emotet malware family showing malicious subgraph interpretability. The larger nodes and grey edges, a subset of which are shown with reference numeral **1810**, represent the most suspicious code blocks in their respective executables of the malware family. The numbers on the grey nodes identify instruction blocks, as **in Figure** 17.

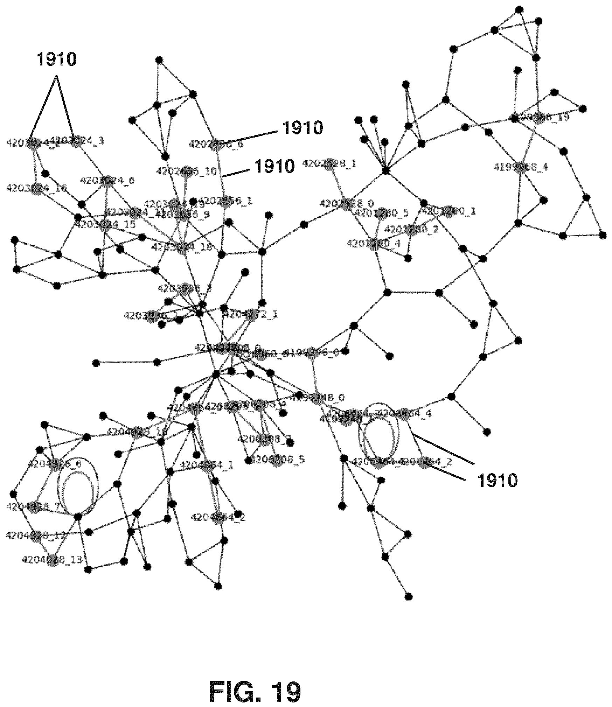

**Figure 19** provides a graph for the Firseria malware family showing malicious subgraph interpretability. The larger nodes and grey edges, a subset of which are shown with reference numeral **1910,** represent the most suspicious code blocks in their respective executables of the malware family.

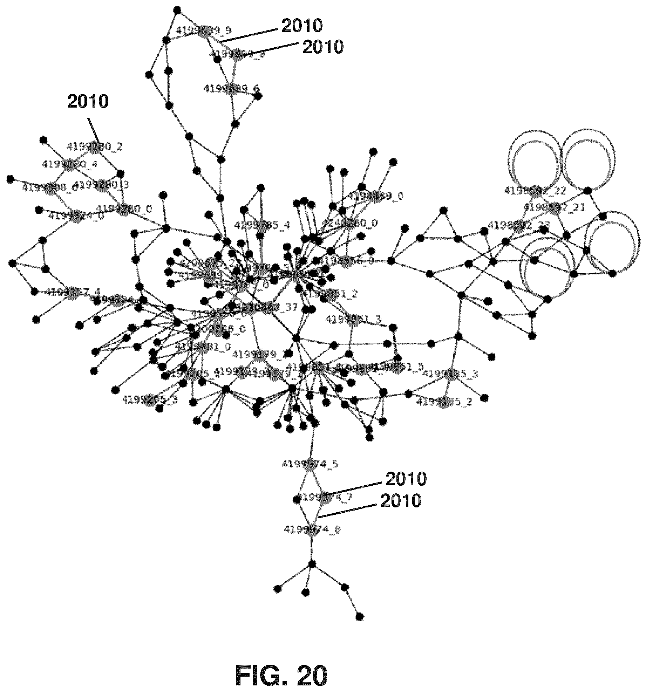

**Figure 20** provides a graph for the Downloadadmin malware family showing malicious subgraph interpretability. The larger nodes and grey edges, a subset of which are shown with reference numeral **2010,** represent the most suspicious code blocks in their respective executables of the malware family.

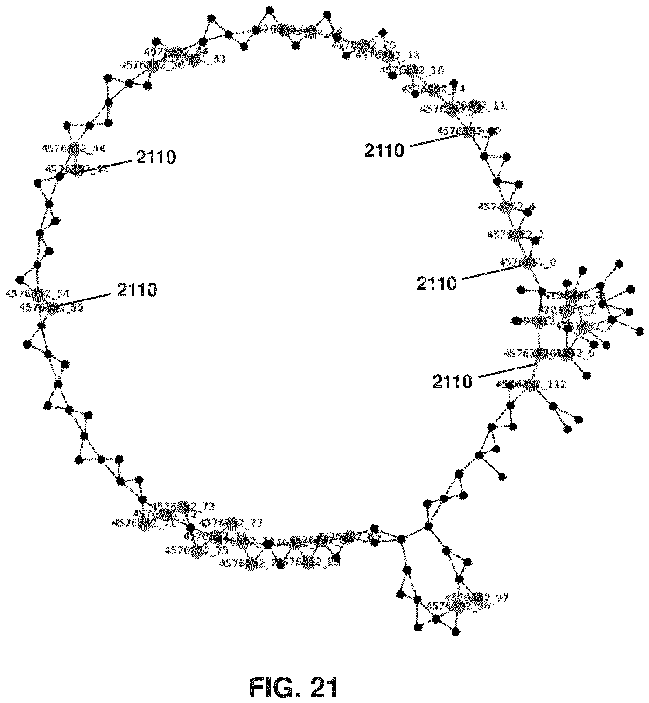

**Figure 21** provides a graph for the Gamarue malware family showing malicious subgraph interpretability. The larger nodes and grey edges, a subset of which are shown with reference numeral **2110,** represent the most suspicious code blocks in their respective executables of the malware family.

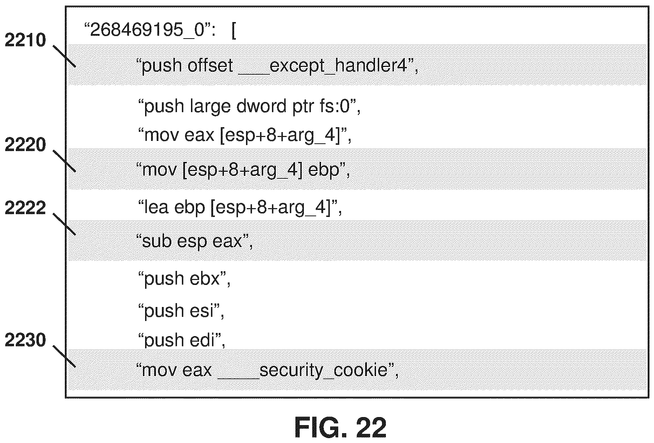

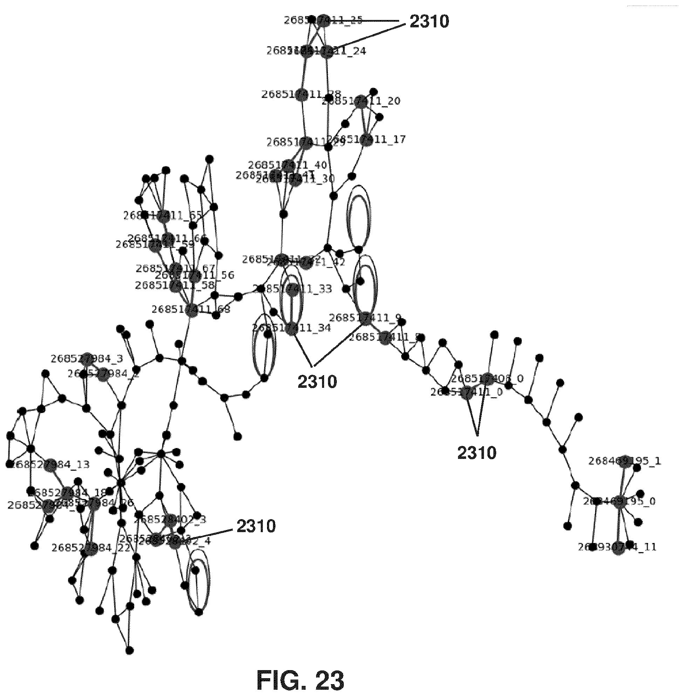

For a comparison with benign samples, reference is made to **Figures 22** and **23**. Benign samples, scrutinized through the extraction of subgraphs via the GAGE algorithm, display markedly distinct attributes in comparison to malicious samples, as seen in **Figure 22.** In particular, **Figure 22** shows the interpretability of extracted code from a benign sample. Reference **2210** relates to exception handling codes, reference **2220** pertains to stack pointer management, and reference **2230** illustrates security-related checkpoints. In benign samples, code blocks highlighted by GAGE indicate these aspects.

The code blocks within benign samples are systematically structured and organized, executing particular operations or tasks, which is shown in **Figure 23**. In particular, **Figure 23** shows the interpretability of benign sample, where the larger circles, shown in some cases with reference nodes **2310,** indicate code-blocks highlighted by GAGE.

Key findings from the malicious code extracted by GAGE include code architecture findings; handling exception finding; security protocol findings; and memory administration findings.

With regard to code architecture, benign samples generally display a modular and systematic code structure engineered to execute specific functionalities, which stands in stark contrast to the frequently obfuscated or packed code observed in malware.

With regard to handling exceptions, instructions pertinent to exception handling, such as *pushoffset except handler4,* are commonplace in benign samples, ensuring the adept management of runtime errors and exceptions.

With regard to security protocols, instructions concerning security, such as *moveax_security_cookie,* along with subsequent operations, manage security cookies, a strategy employed in benign software to thwart buffer overflow attacks, illustrated in **Figure 22** with reference **2230**.

With regard to memory administration, proficient memory management is demonstrated through instructions that manage local variables and function calls, a characteristic typically observed in benign software e.g., managing stack pointer, shown with references **2220** in **Figure 22.**

## Validation Using the MUTAG Dataset

Without ground truth for evaluating Interpretability on malicious file datasets, we turn to real-world data, specifically the MUTAG dataset, as for example defined in A. K. Debnath et al., "Structure-activity relationship of mutagenic aromatic and heteroaromatic nitro compounds. Correlation with molecular orbital energies and hydrophobicity," Journal of Medicinal Chemistry, vol. 34, no. 2, pp. 786-797, 1991., the contents of which are incorporated herein by reference, to validate the results of the present systems and methods.

The MUTAG dataset comprises a collection of nitroaromatic compounds designed for graph classification to distinguish between mutagenic and non-mutagenic compounds. One objective is to assess interpretability by identifying subgraphs or nodes corresponding to mutagenic behavior in graph structures.

For the tests, the process was initiated by performing graph classification, achieving favorable discriminative power. Subsequently, GAGE was employed to obtain interpretability.

After training the model for classification and extracting subgraphs for both mutagenic and non-mutagenic classes, meaningful results may be obtained. Non-mutagenic compounds within the MUTAG dataset are primarily composed of carbon (C), nitrogen (N), oxygen (O), and hydrogen (H) atoms. This is for example described in R. T. LaLonde et al., "Bromine-, chlorine-, and mixed halogen-substituted 4-methyl-2 (5 h)-furanones: Synthesis and mutagenic effects of halogen and hydroxyl group replacements," Chemical research in toxicology, vol. 10, no. 12, pp. 1427-1436, 1997, and in S. Stolzenberg et al., "Mutagenicity of 2-and 3-carbon halogenated compounds in the salmonella/mammalian-microsome test," Environmental Mutagenesis, vol. 2, no. 1, pp. 59-66, 1980, the contents of both of which are incorporated herein by reference.

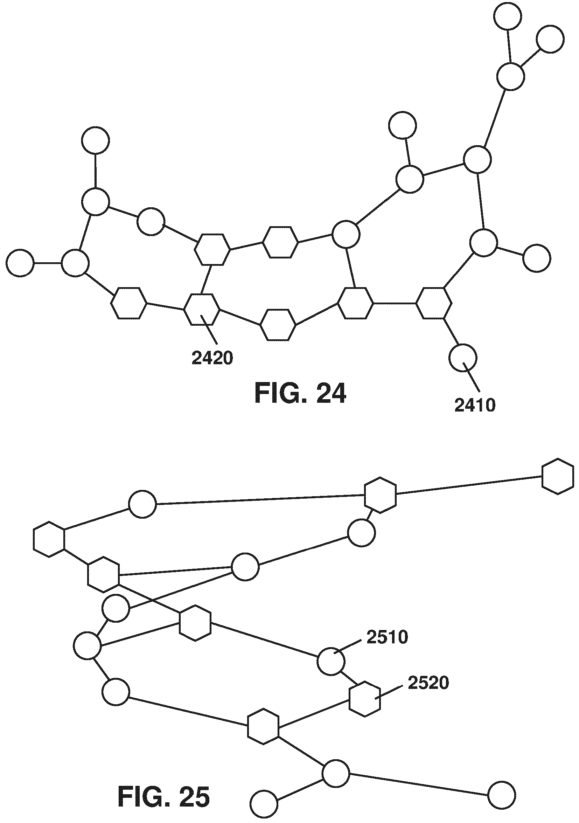

These elements are commonly found in various organic compounds and are building blocks for numerous biological molecules. GAGE effectively highlights C and O nodes in the case of non-mutagenic compounds, as for example shown in **Figure 24.**

Specifically, **Figure 24** shows a non-mutagenic compound, where circular nodes **2410** represent typical nodes, while hexagonal nodes **2420,** highlighted by GAGE, correspond to carbon (C) and oxygen (O) atoms.

In contrast, mutagenic compounds within the MUTAG dataset exhibit a broader spectrum of atoms than non-mutagenic ones. While carbon (C), nitrogen (N), oxygen (O), and hydrogen (H) atoms remain prevalent, mutagenic compounds can also incorporate halogens such as fluorine (F), chlorine (Cl), bromine (Br), and iodine (I), as for example described in LaLonde and Stolzenberg, *supra.* In mutagenic cases, GAGE successfully identifies Cl and H atoms, as for example shown in **Figure 25**.

Specifically, **Figure 25** shows a mutagenic compound, where circular nodes **2510** represent typical nodes, while hexagonal nodes **2520,** highlighted by GAGE, correspond to halogen atoms.

Therefore, based on the embodiments of **Figures 1** to **25** above, methods and systems are provided which are designed to address the unique characteristics of malicious files, such as the non-applicability of gradient and perturbation algorithms, surrogation, and division methods. The embodiments herein capture syntax and semantic-level knowledge through node encoding, and the resulting graph structure, CEG, retains all the details of the executable code.

The embodiments herein achieve superior discriminative power, with an 87% accuracy rate, and a lower false positive rate. Furthermore, GAGE provides interpretability, yielding a robustness score of 97.67%, an important aspect for distinguishing between different malware families. A manual analysis of the code extracted by the model of the embodiments herein found it highly valuable for reverse engineering purposes. The extracted subgraph contains some unfamiliar and suspicious elements, which can be used for further investigation. In addition, the model of the embodiments herein was applied to a real-world dataset, MUTAG, which obtained meaningful results in terms of interpretability.

**Example Hardware**

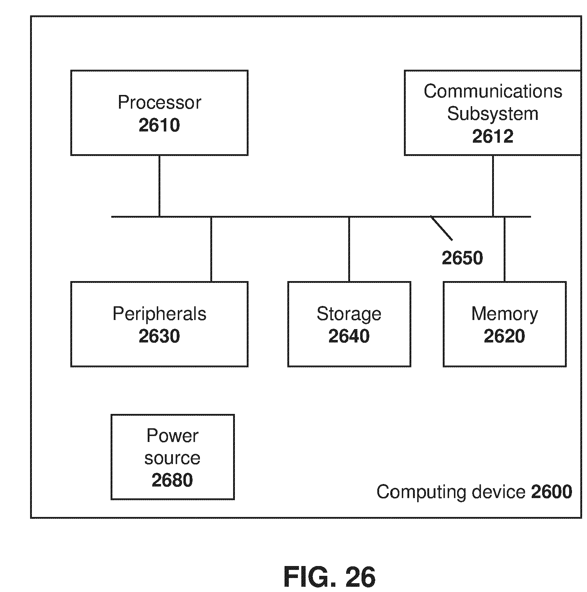

The above functionality may be implemented on any one or combination of computing devices. **Figure 26** is a block diagram of a computing device **2600** that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, etc. The computing device **2600** may comprise a central processing unit (CPU) or processor **2610,** communications subsystem **2612,** memory **2620,** a mass storage device **2640,** and peripherals **2630.**

Peripherals **2630** may comprise, amongst others one or more input/output devices, such as a speaker, microphone, mouse, touchscreen, keypad, keyboard, printer, display, network interfaces, and the like.

Communications between processor **2610,** communications subsystem **2612,** memory **2620,** mass storage device **2640,** and peripherals **2630** may occur through one or more buses **2650.** The bus **2650** may be one or more of any type of several bus architectures including a memory bus or memory controller, a peripheral bus, video bus, or the like.

The processor **2610** may comprise any type of electronic data processor. The memory **2620** may comprise any type of system memory such as static random-access memory (SRAM), dynamic random access memory (DRAM), synchronous DRAM (SDRAM), read-only memory (ROM), a combination thereof, or the like. In an embodiment, the memory **2620** may include ROM for use at boot-up, and DRAM for program and data storage for use while executing programs.

The mass storage device **2640** may comprise any type of storage device configured to store data, programs, and other information and to make the data, programs, and other information accessible via the bus. The mass storage device **2640** may comprise, for example, one or more of a solid-state drive, hard disk drive, a magnetic disk drive, an optical disk drive, or the like.

The computing device **2600** may also include a communications subsystem **2612,** which may include one or more network interfaces, which may comprise wired links, such as an Ethernet cable or the like, and/or wireless links to access nodes or different networks. The communications subsystem **2612** allows the processing unit to communicate with remote units via the networks. For example, the communications subsystem **2612** may provide wireless communication via one or more transmitters/transmit antennas and one or more receivers/receive antennas. In an embodiment, the processing unit is coupled to a local-area network or a wide-area network, for data processing and communications with remote devices, such as other processing units, the Internet, remote storage facilities, or the like.

Through the descriptions of the preceding embodiments, the teachings of the present disclosure may be implemented by using hardware only or by using a combination of software and hardware. Software or other computer executable instructions for implementing one or more embodiments, or one or more portions thereof, may be stored on any suitable computer readable storage medium. The computer readable storage medium may be a tangible or in transitory/non-transitory medium such as optical (e.g., CD, DVD, Blu-Ray, etc.), magnetic, hard disk, volatile or non-volatile, solid state, or any other type of storage medium known in the art.

**Claims**

1. A method for determining whether an executable code is a malware, the method comprising:

   disassembling the executable code to create disassembled instructions;
   extracting instruction blocks from the disassembled instructions;
   encoding the instruction blocks to create encoded instruction blocks and generating a first data graph, wherein the first data graph comprises nodes, each node from the first data graph being associated with an encoded instruction block;
   determining for each node an embedding of the encoded instruction block to create a canonical executable graph;
   classifying the canonical executable graph into either a benign family or a malicious family; and
   determining that the executable code is a malware when the canonical executable graph belongs to a malicious family.

2. The method of claim 1, wherein determining the embedding for each node comprises:
   capturing spatial features within the encoded instruction block using an attention encoder, thereby creating the embedding of the encoded instruction block.

3. The method of claim 2, wherein the attention encoder produces an output $E_O$ according to an attention function:

$$E_O = Attention\big(Conv1D(B(m,n)\big)$$

   where $B(m,n)$ represents an encoded instruction block, m denotes a number of instructions, and each instruction has an embedding of size $n$, and the output is generated by a one-dimensional convolutional neural network $Conv1D$.

4. The method of any previous claim, wherein the canonical executable graph further comprises edges to model control-flow relationships.

5. The method of claim 4, wherein the edges are one or more of:

   consequent edges ($E_C$);
   conditional/fallthrough edges ($E_{Cond}$);
   intra-function edges ($E_{Intra}$); and
   external edges ($E_{External}$).

6. The method of any previous claim, wherein the classifying uses a Graph Convolutional Neural Network.

7. The method of any previous claim, further comprising utilizing a graph explainer on the canonical executable graph to create a classified graph for malware identification.

8. The method of claim 7, wherein the graph explainer is a genetic algorithm graph explainer comprising iteratively:

   initializing a subgraph by representing the subgraph as a chromosome of a first length, wherein each element within the chromosome corresponds to an edge index;
   performing a crossover by combining the chromosome of the subgraph with a further chromosome to generate a child chromosome;
   creating a decoded subgraph from the chromosome using an encoding-decoding mapping function;

assigning a fitness value to the decoded subgraph; and
selecting subgraphs that have the lowest fitness values within the population to proceed to a next generation, wherein, after a stop criterion is reached, the classified graph is created.

9. The method of claim 8, wherein the classified graph is used to identify and isolate malware in a computing system.

10. A computing device comprising:

   a processor; and
   a memory,

   wherein the memory comprises processor-executable instructions that, when executed by the processor, cause the processor to carry out the method of any preceding claim.

11. A computer program which, when executed by a processor, is configured to cause the processor to carry out the method of any one of the claims 1 to 9.

Reverse
Engineering and
Code Analysis **130**

Behavior and Dynamic
Properties Analysis **120**

Static Properties Analysis **110**

FIG. 1

EP 4 560 509 A1

CEG constructor

EXE 210

Graph creator   Graph encoder

JSON2Graph                              PalmTree        230        AED

**JSON** 212

**F1**
  **B1** [i₁,i₁,...,iₙ] [2,3,5]
  **B2** [i₁,i₁,...,iₙ] [1,2]
  ...   ...         ...
  **B5** [i₁,i₁,...,iₙ] [3,4]

**F2**
  **B1** [i₁,i₁,...,iₙ] [2,3,5]
  **B2** [i₁,i₁,...,iₙ] [1,2]
  ...   ...         ...
  **B5** [i₁,i₁,...,iₙ] [3,4]

**F-n**
  **B1** [i₁,i₁,...,iₙ] [2,3,5]
  **B2** [i₁,i₁,...,iₙ] [1,2]
  ...   ...         ...
  **B5** [i₁,i₁,...,iₙ] [3,4]

Disassembler

**F1 B1**
[xor  eax bax],
[mov  edx,1],
...
[call  str_0xh13100]

**F1 B2**
[add  eax bax],
[sub  edx,1],
...
[call  str_0xh00100]

**F2 B2**
[mov edx,
 0xh00111],
[sub edx,
 0xh211a1],
...
[call str_
 0xh00100]

**Fn B(x-1)**
[jz
 0xh0012b],
[sub edx,
 0xh211a1],
...
[call str_
 0xh00100]

**Fn B(x)**
[call 0xh0012b],
[add edx,0xh211a1],
...
[jnz  str_0xh00100]

214

**F1 B1**
[2.3,5.1,...,9.9],
[5.3,5.2,...,6.9],
...
[3.6,8.8,..,5.5]

**F1 B2**
[5.5,5.1,...,9.9],
[5.3,1.2,...,6.9],
...
[1.6,8.1,...,1.5]

**F2 B2**
[9.5,9.9,...,
 9.1],
[5.9,1.2,...,
 6.9],
...
[1.9,8.1,...,
 1.5]

**Fn B(x-1)**
[7.6,9.1,...,
 9.9],
[2.3,3.2,...,
 6.5],
...
[3.6,8.8,...,
 5.5]

**Fn B(x)**
[1.6,3.1,...,9.7]
[2.4,5.2,...6.4]
...
[7.6,8.1,...,9.5]

220

Graph
Reducer

240

FIG. 2

21

**FIG. 3**

FIG. 4

EP 4 560 509 A1

MMD between class Benign and class Bladabindi

FIG. 5

MMD between class Benign and class Bundlore

FIG. 6

MMD between class Benign and class Downloadadmin

FIG. 7

MMD between class Benign and class Gamarue

FIG. 8

MMD between class Benign and class Firseria

**FIG. 9**

MMD between class Benign and class Emotet

**FIG. 10**

MMD between class Bladabindi and class Gamarue

FIG. 11

MMD between class Bundlore and class Downloadadmin

FIG. 12

MMD between class Bladabindi and class Firseria

FIG. 13

MMD between class Bladabindi and class Downloadadmin

FIG. 14

MMD between class Firseria and class Gamarue

FIG. 15

MMD between class Bundlore and class Emotet

FIG. 16

**1710**

```
"mov esi [ebp+arg_4]",
"mov edi [ebp+arg_0]",
"mov [esp+54h+var_20] 7D820636h",
"mov ebx [esp+54h+var_1C]",
"mov [esp+54h+var_28] eax",
"mov eax [esp+54h+var_18]",
"mov [esp+54h+var_2C] eax",
"mov eax 7D820636h",          1730
"mov [esp+54h+var_18] 0",
"mov [esp+54h+var_1C] 3076148Dh",
"add eax 827DF9CAh",      1730
"cmp ecx eax",
"mov [esp+54h+var_30] ebx",
"mov [esp+54h+var_34] ecx",
"mov [esp+54h+var_38] edx",
"mov [esp+54h+var_3C] esi",
"mov [esp+54h+var_40] edi",
"jnz loc_401097"
```

```
"4198896_0": [
    "jmp ds:__imp_DllFunctionCall"
],                                1720
"4576352_129": [
    "call ds:__vbaErrorOverflow"
],
"4576352_11": [
    "push offset dword_460010",
    "push offset dword_40172C",
    "call ds:__vbaNew2"
],                                1720
"4576352_16": [
    "mov edx [ebp+var_D0]"
    "push offset aFavoritesFolde",
    "lea ecx [ebp+var_4C]",
    "call esi",
    "push eax",                   1710
    "call edi"
```

```
"4216868_37": [
    "xor eax eax",        1740
    "lea ecx [esp+0DCh+var_64]",
    "push 0",
    "inc eax",                1710
    "push eax",
    "call sub_4016CA",
    "xor eax eax",        1740
    "lea ecx [esp+0DCh+var_4C]",
    "push 0",
    "inc eax",
    "push eax",           1720
    "call sub_4016CA",
    "xor eax eax",      1740
    "lea ecx [esp+0DCh+Dst]",
    "push 0",
    "inc eax",              1710
    "push eax",
```

```
"add esi 0FF4A7FB9h",   1730
"and esi 448960Bh",
"add edx 4682465Dh",
"mov [esp+3Ch+var_20] edx",
"xor esi 6E6D5C0h",   1740
"mov [esp+3Ch+var_30] eax",
"mov [esp+3Ch+var_34] ecx",
"mov [esp+3Ch+var_38] esi",
"jnz loc_402335"
],
"4204928_4": [
    "mov eax 1E15A90Eh",  1730
    "mov ecx 115F53Dh",
    "mov edx [esp+54h+var_3C]",
    "sub ecx edx",
    "mov esi [esp+54h+var_24] ",
    "add esi 43FFB12Ch",  1730
```

# FIG. 17

FIG. 18

FIG. 19

FIG. 20

FIG. 21

```
"268469195_0":  [
        "push offset ___except_handler4",

        "push large dword ptr fs:0",
        "mov eax [esp+8+arg_4]",

        "mov [esp+8+arg_4] ebp",

        "lea ebp [esp+8+arg_4]",

        "sub esp eax",

        "push ebx",

        "push esi",

        "push edi",

        "mov eax ____security_cookie",
```

**FIG. 22**

**FIG. 23**

36

2420

**FIG. 24**

2410

2510

2520

**FIG. 25**

Processor
**2610**

Communications
Subsystem
**2612**

**2650**

Peripherals
**2630**

Storage
**2640**

Memory
**2620**

Power
source
**2680**

Computing device **2600**

FIG. 26

Europäisches
Patentamt

European
Patent Office

Office européen
des brevets

# EUROPEAN SEARCH REPORT

**Application Number**

EP 24 21 4552

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 113 397 B2 (CISCO TECH INC [US]) 7 September 2021 (2021-09-07) | 1-6,10, 11 | INV.<br>G06F21/56 |
| Y | * columns 7,10,12,14; claim 1; figures 3C,4,6,7 * | 7-9 | G06N3/0464<br>G06N3/084<br>G06N3/086 |
| Y | HERATH JEROME DINAL ET AL: "CFGExplainer: Explaining Graph Neural Network-Based Malware Classification from Control Flow Graphs", 2022 52ND ANNUAL IEEE/IFIP INTERNATIONAL CONFERENCE ON DEPENDABLE SYSTEMS AND NETWORKS (DSN), IEEE, 27 June 2022 (2022-06-27), pages 172-184, XP034155720, DOI: 10.1109/DSN53405.2022.00028 [retrieved on 2022-07-25] | 7-9 | G06N3/126 |
| A | * sections I-IV; figure 1 * | 1-6,10, 11 | |

TECHNICAL FIELDS
SEARCHED      (IPC)

G06F
G06N

The present search report has been drawn up for all claims

| Place of search | Date of completion of the search | Examiner |
|---|---|---|
| The Hague | 11 December 2024 | Pichler Trauber, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 4552

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | Publication date | Patent family member(s) | Publication date |
|---|---|---|---|
| US 11113397 B2 | 07-09-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. UCCI et al.** Survey of machine learning techniques for malware analysis. *Computers & Security*, 2019, vol. 81, 123-147
- **S. CESARE et al.** Classification of malware using structured control flow. *Proceedings of the Eighth Australasian Symposium on Parallel and Distributed Computing*, 2010, vol. 107, 61-70
- **R. SIHWAIL et al.** A survey on malware analysis techniques: Static, dynamic, hybrid and memory analysis. *Int. J. Adv. Sci. Eng. Inf. Technol*, 2018, vol. 8, 1662-1671
- **O. OR-MEIR et al.** Dynamic malware analysis in the modern era-a state of the art survey. *ACM Computing Surveys (CSUR)*, 2019, vol. 52 (5), 1-48
- **A. SHALAGINOV et al.** Machine learning aided static malware analysis: A survey and tutorial. *Cyber threat intelligence*, 2018, 7-45
- Static and dynamic malware analysis using machine learning. **M. IJAZ et al.** 2019 16th International Bhurban conference on applied sciences and technology (IBCAST).. IEEE, 2019, 687-691
- **Z. ZHANG et al.** Dynamic malware analysis with feature engineering and feature learning. *Proceedings of the AAAI conference on artificial intelligence*, 2020, vol. 34 (01), 1210-1217
- **D. CASTELVECCHI**. Can we open the black box of ai?. *Nature News*, 2016, vol. 538 (7623), 20
- **K. D. COOPER et al.** Building a control-flow graph from scheduled assembly code. *Tech. Rep.*, 2002
- Generation of control and data flow graphs from scheduled and pipelined assembly code. **D. C. ZARETSKY et al.** Languages and Compilers for Parallel Computing: 18th International Workshop. LCPC, 20 October 2005
- Revised Selected Papers. Springer, 2006, vol. 18, 76-90
- Classifying malware represented as control flow graphs using deep graph convolutional neural network. **YAN et al.** 2019 49th annual IEEE/IFIP international conference on dependable systems and networks (DSN). IEEE, 2019, 52-63
- **NGUYEN et al.** Autodetection of sophisticated malware using lazy-binding control flow graph and deep learning. *Computers & Security*, 2018, vol. 76, 128-155
- **KINABLE et al.** Malware classification based on call graph clustering,. *Journal in computer virology*, 2011, vol. 7 (4), 233-245

- **HASSEN et al.** Scalable function call graph-based malware classification. *Proceedings of the Seventh ACM on Conference on Data and Application Security and Privacy*, 2017, 239-248
- **WUCHNER et al.** Malware detection with quantitative data flow graphs. *Proceedings of the 9th ACM symposium on Information, computer and communications security*, 2014, 271-282
- Robust and effective malware detection through quantitative data flow graph metrics. **WUCHNER et al.** Detection of Intrusions and Malware, and Vulnerability Assessment: 12th International Conference. DIMVA, 11 July 2015
- Proceedings. Springer, 2015, vol. 12, 98-118
- Cfgexplainer: Explaining graph neural network-based malware classification from control flow graphs. **HERATH et al.** 2022 52nd Annual IEEE/IFIP International Conference on Dependable Systems and Networks (DSN).. IEEE, 2022, 172-184
- **F. BALDASSARRE et al.** Explainability techniques for graph convolutional networks. *arXiv preprint arXiv: 1905.13686*, 2019
- **P. E. POPE et al.** Explainability methods for graph convolutional neural networks. *Proceedings of the IEEE/CVF conference on computer vision and pattern recognition*, 2019, 10 772-10 781
- **Q. HUANG et al.** Graphlime: Local interpretable model explanations for graph neural networks. *IEEE Transactions on Knowledge and Data Engineering*, 2022
- **Y. ZHANG et al.** Relex: A model-agnostic relational model explainer. *Proceedings of the 2021 AAAI/ACM Conference on AI, Ethics, and Society*, 2021, 1042-1049
- **M. VU et al.** Pgm-explainer: Probabilistic graphical model explanations for graph neural networks. *Advances in neural information processing systems*, 2020, vol. 33, 12 225-12 235
- **T. SCHNAKE et al.** Higher-order explanations of graph neural networks via relevant walks. *IEEE transactions on pattern analysis and machine intelligence*, 2021, vol. 44 (11), 7581-7596
- **H. YUAN et al.** Xgnn: Towards model-level explanations of graph neural networks. *Proceedings of the 26th ACM SIGKDD International Conference on Knowledge Discovery & Data Mining*, 2020, 430-438

- **X. LI et al.** Palmtree: learning an assembly language model for instruction embedding. *Proceedings of the 2021 ACM SIGSAC Conference on Computer and Communications Security*, 2021, 3236-3251
- **A. K. DEBNATH et al.** Structure-activity relationship of mutagenic aromatic and heteroaromatic nitro compounds. Correlation with molecular orbital energies and hydrophobicity. *Journal of Medicinal Chemistry*, 1991, vol. 34 (2), 786-797
- **R. T. LALONDE et al.** Bromine-, chlorine-, and mixed halogen-substituted 4-methyl-2 (5 h)-furanones: Synthesis and mutagenic effects of halogen and hydroxyl group replacements. *Chemical research in toxicology*, 1997, vol. 10 (12), 1427-1436
- **S. STOLZENBERG et al.** Mutagenicity of 2-and 3-carbon halogenated compounds in the salmonella/-mammalian-microsome test,. *Environmental Mutagenesis*, 1980, vol. 2 (1), 59-66